# EUROPÄISCHE PATENTSCHRIFT

(11) **EP 2 133 794 B1**
(45) Veröffentlichungstag und Bekanntmachung des Hinweises auf die Patenterteilung: **01.05.2019**
(21) Anmeldenummer: 09007730.6
(22) Anmeldetag: 11.06.2009
(51) Int. Cl.: H04L 12/24, G06F 11/22, G06F 11/273, G06F 11/07

(54) **ANALYSE VON FEHLVERHALTEN EINES IN EINEM KOMMUNIKATIONSNETZ BETREIBBAREN KOMMUNIKATIONSENDGERÄTES**
ANALYSIS OF INCORRECT BEHAVIOUR OF A COMMUNICATION TERMINAL WHICH CAN BE OPERATED IN A COMMUNICATION NETWORK
ANALYSE D'UN COMPORTEMENT ERRONÉ D'UN TERMINAL DE COMMUNICATION FONCTIONNANT DANS UN RÉSEAU DE COMMUNICATION

(30) Priorität: 11.06.2008 DE 102008027810
(43) Veröffentlichungstag der Anmeldung: 16.12.2009
(73) Patentinhaber: Vodafone Holding GmbH, 40213 Düsseldorf (DE)
(72) Erfinder: Cakmak, Merall, 50679 Köln (DE)
(74) Vertreter: Ring & Weisbrodt

(56) Entgegenhaltungen:
- WO-A2-98/38823
- DE-B4- 10 107 352
- US-A- 5 903 626
- US-A1- 2001 006 891

## Beschreibung

Die vorliegende Erfindung betrifft ein System zur teilautomatischen Analyse von Fehlverhalten eines in einem Kommunikationsnetz betreibbaren Kommunikationsendgerätes eines Kunden eines Kommunikationsnetzbetreibers oder eines in einem Kommunikationsnetzwerk betreibbaren Kommunikationsendgerätes eines Kunden eines Kommunikationsdiensteanbieters.

Die Analyse von Fehlverhalten von in einem Kommunikationsnetz betreibbaren Kommunikationsendgeräten ist ein wesentlicher Bestandteil von Serviceleistungen zwischen Kommunikationsendgeräte und/oder Kommunikationsdienste nutzenden bzw. in Anspruch nehmenden Kunden und Kommunikationsnetzbetreibern und/oder Kommunikationsdiensteanbietern als auch Kommunikationsendgeräteherstellern. Die Analyse ist dabei insbesondere Bestandteil der Beratung bzw. Instandsetzung von Funktionalitäten von Kommunikationsendgeräten, insbesondere im Rahmen der Reparaturannahme, insbesondere zur Vorbestimmung von Gewährleistungs- und/oder Garantieansprüchen des Kunden bezogen auf das Kommunikationsendgerät und/oder in dem Kommunikationsnetz zur Verfügung stehenden Kommunikationsdiensten.

Aus der sich mit einem Verfahren und einer Einrichtung zur Bearbeitung von Reklamationen an Mobiltelefonen befassenden DE 101 07 352 B4 sind diesbezüglich folgende Konzepte, Zielsetzungen und/oder Vorgehensweisen als bekannt offenbart:
- Lokales Service-, oder Vertriebspartnernetz, welches die Beratung und/oder Reparaturannahme am jeweiligen Standort sicherstellt;
- Call-Center, welches entweder die Reparatur selbst annimmt und/oder an lokale Servicepartner verweist;
- kombiniertes Konzept, bei dem sich lokale Service- und/oder Vertriebspartner an ein Call-Center wenden;

Die Zielsetzungen sind dabei insbesondere wie folgt gelagert:
- Klärung, ob tatsächlich ein technisches Problem vorliegt;
- Vermeidung von unnötigen Reparaturfällen;
- Prüfung von Gewährleistungs- und/oder Garantieansprüchen;
- Ermittlung bzw. Bestimmung von Fehlverhalten; und/oder
- Erfassen von Kunden- und/oder Gerätedaten.

Die Realisierung dieser Zielsetzungen erfolgt dabei insbesondere hinsichtlich einer Instandsetzung der Funktionalitäten durch
- eine Reparatur vor Ort durch lokale Servicepartner des Kunden,
- ein Einsenden von schwerwiegenden Fällen an zentrale Reparaturcenter,
- ein Einsenden aller Reparaturfälle an zentrale Reparaturcenter,
- ein Austauschen von defekten Geräten beim Kunden und/oder
- ein Austauschen von defekten Geräten in einem lokalen Vertriebspunkt.

Die Zielsetzungen bei einer Reparatur begründen sich im wesentlichen in
- einer möglichst schnellen Instandsetzung von defekte Geräten,
- geringeren Logistik-, Reparatur- und/oder Transportkosten und/oder
- geringeren Ausfallzeiten für Kunden.

Die WO 98 38823 A2 offenbart ein auf einem Call-Center basierendes System zur Bearbeitung von Problemen und Reklamationen im Zusammenhang mit Mobilkommunikationsgeräten, bei welchem ein Kunde entweder per Computer oder telefonisch Kontakt mit einem Sachbearbeiter (Service-Agent) des Call-Centers aufnimmt und ihm sein Problem schildert. Der Agent hat Zugriff auf ein automatisches Diagnose- und Problembehandlungssystem mit dessen Hilfe er zusammen mit dem Kunden interaktiv eine Problemlösung suchen kann. Dieses System erleichtert und beschleunigt zwar die Fehlerdiagnose, benötigt aber nach wie vor einen Service-Agenten für die telefonische Kommunikation und Interaktion mit dem Kunden. Zur Vorbestimmung von Gewährleistungs- und/oder Garantieansprüchen des Kunden bezogen auf dessen Endgerät ist dieses System jedoch nicht geeignet, insbesondere aufgrund der Mitwirkung des Kunden.

Die bisher insgesamt bekannten Servicekonzepte machen für die Analyse von Fehlverhalten eines in einem Kommunikationsnetz betreibbaren Kommunikationsendgerätes eines Kunden eines Kommunikationsnetzbetreibers und/oder eines Kommunikationsdiensteanbieters einen erhöhten Einsatz von qualifiziertem Personal seitens entsprechender Kundenserviceeinrichtungen erforderlich. Die hohen Anforderungen an die Personalqualifikation sind dabei insbesondere in dem komplexen Zusammenspiel von Gerätehardware, Gerätesoftware als auch dem Umstand der großen Anzahl an unterschiedlichen Geräten und Geräte- und/oder zur Verfügung stehenden Kommunikationsdiensten gegeben.

Der Erfindung liegt in Anbetracht dieses Standes der Technik die Aufgabe zugrunde, die Analyse von Fehlverhalten eines in einem Kommunikationsnetz betreibbaren Kommunikationsendgerätes unter Meidung der beschriebenen Nachteile zu verbessern, insbesondere hinsichtlich des Personalaufwandes als auch der Personalqualifikation.

Zur technischen Lösung wird mit der vorliegenden Erfindung ein System mit den Merkmalen des Anspruchs 1 vorgeschlagen.

Vorteilhafte Ausgestaltungen des Systems sind in den Unteransprüchen angegeben.

Die Signalisierung erfolgt dabei vorteilhafterweise in graphischer und/oder akustischer Form.

Der Erfindung liegt die Erkenntnis zugrunde, dass sich durch eine erfindungsgemäß erfolgende Analyse von Fehlverhalten eines in einem Kommunikationsnetz betreibbaren Kommunikationsendgerätes insbesondere die Aufwendungen hinsichtlich Personal und/oder Personalqualifikation reduzieren lassen.

Vorteilhafterweise werden die funktionalen Bereiche der Funktionsgruppen, der Diagnosekategorien und/oder der Überprüfungskategorien in funktionale Unterbereiche aufgeteilt.

Erfindungsgemäß wird die Prüfprozedur im Rahmen eines seitens der Kundenserviceeinrichtung signalisierten Ein- und Ausgabedialogs sukzessive erzeugt. Der Ein- und Ausgabedialog erfolgt dabei vorteilhafterweise nach einer Frage- und Antwortfolge.

Erfindungsgemäß ist wenigstens eine der Eingabe einer Funktionsgruppe und/oder einer Modellgruppe nachfolgende Eingabe vorgesehen, umfassend wenigstens eine Überprüfungskategorie und/oder wenigstens eine Diagnosekategorie.

Vorteilhafterweise erfolgt die Signalisierung der Prüfprozedur seitens der Anzeigeeinrichtung der Kundenserviceeinrichtung gruppiert nach Modellgruppen, Funktionsgruppen, Überprüfungskategorien, Diagnosekategorien, und/oder Prüfprozeduren. Die Signalisierung der Prüfprozedur kann seitens der Anzeigeeinrichtung der Kundenserviceeinrichtung in verschiedenen Ansichten erfolgen, vorzugsweise aus Sicht der Modellgruppen, der Funktionsgruppen, der Überprüfungskategorien und/oder der Diagnosekategorien.

Überprüfungen werden im Rahmen einer Prüfprozedur in einer vorgegebenen Reihenfolge durchgeführt, insbesondere um von einem Fehlverhalten zu wenigstens einer Diagnose zu gelangen.

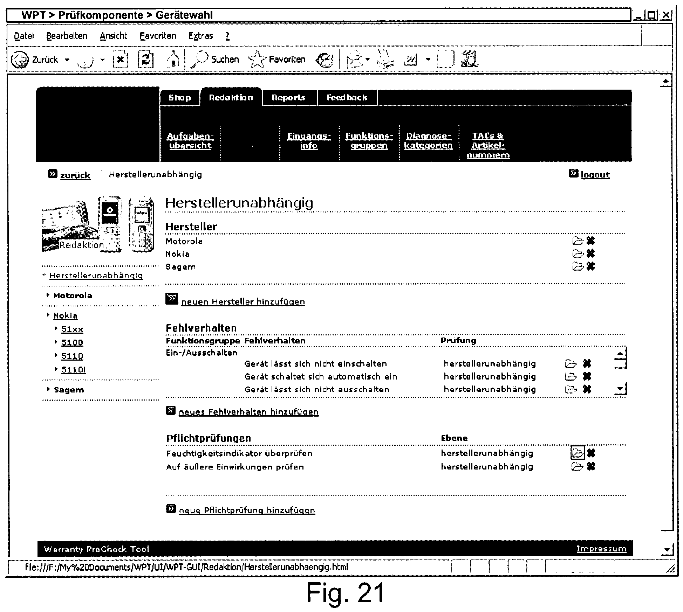

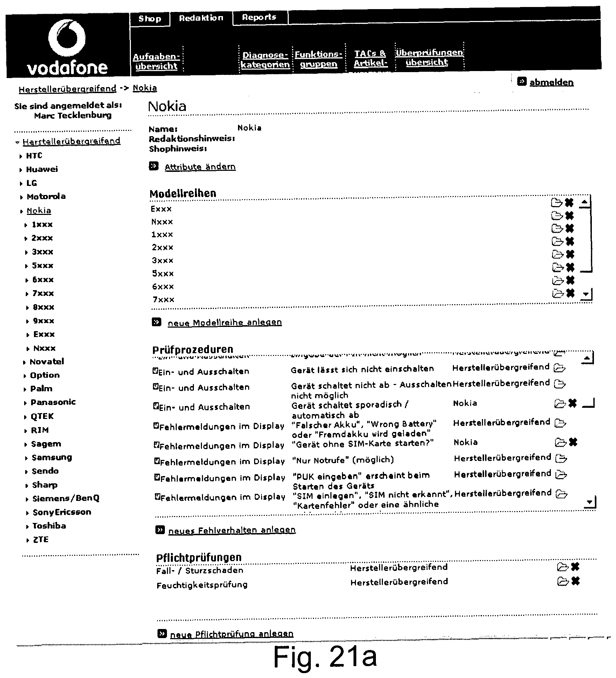

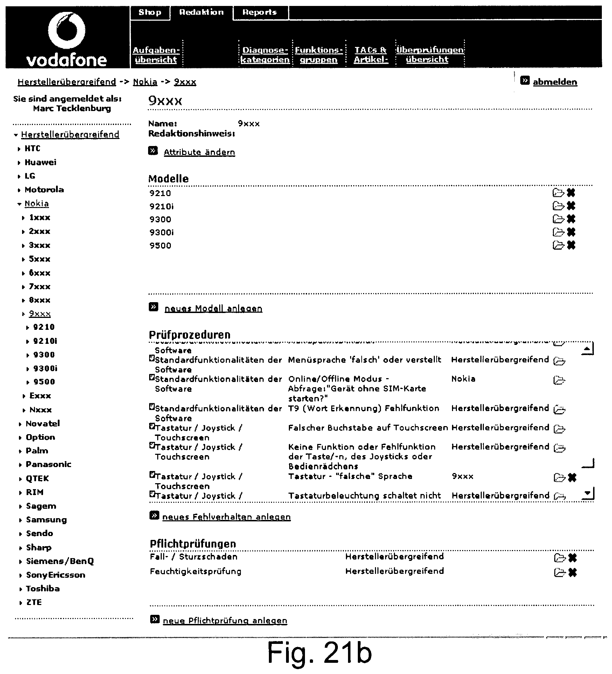

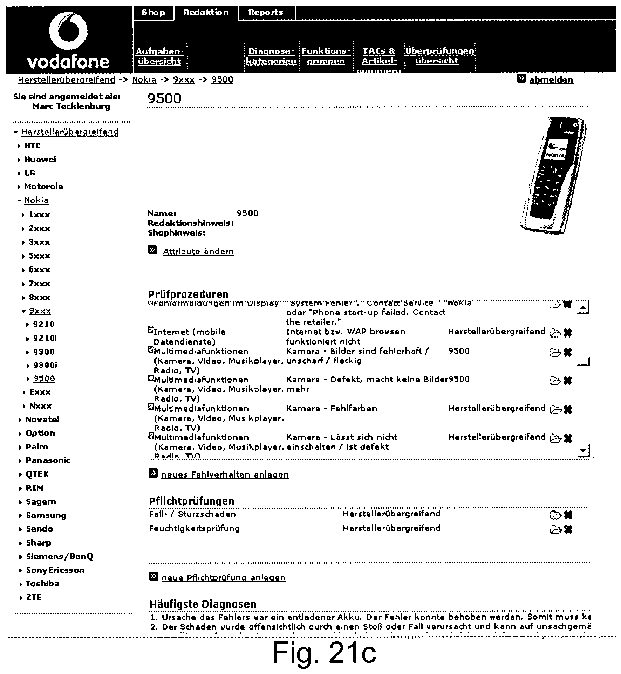

Überprüfte Fehlverhalten können protokolliert und ausgewertet werden. Entsprechende Auswertungen erlauben vorteilhafterweise ein unmittelbares reagieren auf Fehlverhalten, insbesondere Fehlverhalten in Geräteserien und/oder -typen. Beispielsweise werden die vorzugsweise maximal fünf häufigsten Diagnosen dem Redaktionsmitarbeiter dann vorteilhafterweise nach Auswahl des jeweiligen Gerätemodells angezeigt. Somit kann der Redaktionsmitarbeiter Auffälligkeiten auf einen Blick erkennen (vgl. auch Fig. 21 c unter Abschnitt "Häufigste Diagnosen"). Eine Verwertung von entsprechenden Auswertungen kann vorgesehen sein, vorzugsweise durch kostenpflichtige Zurverfügungstellung für Gerätehersteller und/oder dergleichen Interessenten (vgl. Fig. 31, "Reporterstellung").

In einer weiteren vorteilhaften Ausgestaltung der Erfindung werden die möglichen Funktionsgruppen, Diagnosekategorien, Überprüfungskategorien und/oder Modellgruppen jeweils in einer separaten Datenbank und/oder in einer gemeinsamen Datenbank der Kundenserviceeinrichtung bereitgehalten. Die separaten Datenbanken und/oder die gemeinsame Datenbank werden bzw. wird über ein Kommunikationsnetz mit der Kundenserviceeinrichtung verbunden. Vorteilhafterweise können die Datenbanken so von mehreren Serviceeinrichtungen genutzt werden. Vorteilhafterweise werden dabei seitens der jeweiligen Datenbanken sämtliche seitens der verschiedenen Kundenserviceeinrichtungen anfallenden bzw. vorgenommenen erfasst und stehen so für weitergehende Auswertungen mit höherer Analysetiefe und/oder dergleichen zur Verfügung.

Erfindungsgemäß wird die Modellgruppe eines Kommunikationsendgerätes anhand einer eindeutigen Artikelnummer identifiziert. Bei einem als in einem Mobilfunknetz, vorzugsweise einem Mobilfunknetz gemäß einem GSM-, GPRS- und/oder UMTS-Funknetzstandard, betreibbaren mobilen Endgerät ausgebildeten Kommunikationsendgerät wird als eindeutige Artikelnummer des Kommunikationsendgerätes die IMEI und/oder TAC des mobilen Endgerätes verwendet.

Vorteilhafterweise sind die funktionalen Bereiche der Funktionsgruppen, der Diagnosekategorien und/oder der Überprüfungskategorien des erfindungsgemäßen Systems in funktionale Unterbereiche aufgeteilt.

Das erfindungsgemäße System enthält eine die Prüfprozedur im Rahmen eines seitens der Kundenserviceeinrichtung signalisierbaren Ein- und/oder Ausgabedialogs sukzessive erzeugende Einrichtung (Prüfprozedurerzeugungseinrichtung).

Eine weitere besonders vorteilhafte Ausgestaltung eines erfindungsgemäßen Systems ist gekennzeichnet durch wenigstens eine Redaktionseinrichtung zur Erstellung, Bearbeitung und/oder Organisation von Funktionsgruppen, Diagnosekategorien, Überprüfungskategorien, Modellgruppen und/oder Prüfprozeduren.

Eine weitere vorteilhafte Ausgestaltung der Erfindung ist gekennzeichnet durch wenigstens eine Einrichtung zur Protokollierung und/oder Auswertung von überprüften Fehlverhalten.

Vorteilhafterweise sind die möglichen Funktionsgruppen, Diagnosekategorien, Überprüfungskategorien und/oder Modellgruppen und/oder zumindest teilweise Prüfprozeduren jeweils in einer separaten Datenbank und/oder in einer gemeinsamen Datenbank der Kundenserviceeinrichtung bereitgehalten. Die separaten Datenbanken und/oder die gemeinsame Datenbank sind bzw. ist vorteilhafterweise über ein Kommunikationsnetz mit der wenigstens einen Kundenserviceeinrichtung verbindbar.

Eine besonders bevorzugte Ausgestaltung eines erfindungsgemäßen Systems ist dadurch gekennzeichnet, dass in den separaten Datenbanken und/oder die gemeinsame Datenbank in den Funktionsgruppen, Diagnosekategorien, Überprüfungskategorien und/oder Modellgruppen und/oder zumindest teilweise Prüfprozeduren Informationen bezüglich in einem Mobilfunknetz, vorzugsweise einem Mobilfunknetz gemäß einem GSM-, GPRS- und/oder UMTS-Funknetzstandard, betreibbaren mobilen Endgeräten als Kommunikationsendgeräten erfasst sind.

Die Erfindung ermöglicht vorteilhafterweise eine insgesamt verbesserte Servicequalität, beispielsweise hinsichtlich der Erkennung von Bedienungsfehlern, eine Erhöhung und/oder Vereinheitlichung der technischen Beratungskompetenz des Personals an einer Kundenserviceeinrichtung (PoS: Point of Service) und dadurch insbesondere eine Minimierung von Fehlentscheidungen insbesondere bezüglich Gewährleistungs- und/oder Garantieansprüchen von Kunden bezogen Kommunikationsendgeräte. Entscheidungen des Personals an einer Kundenserviceeinrichtung (PoS: Point of Service) werden durch eine erfindungsgemäß gegebene systemunterstützte Fehleranalyse qualifizierter und insbesondere für den Kunden transparenter, was insbesondere gerade hinsichtlich Gewährleistungs- und/oder Garantieansprüchen von Kunden bezogen auf Kommunikationsendgeräte zur Steigerung von Kundenbindungen nutzbar ist.

Weitere Einzelheiten, Merkmale und Vorteile der Erfindung werden nachfolgend anhand der in den Figuren der Zeichnung dargestellten Ausführungsbeispiele der Erfindung näher erläutert.

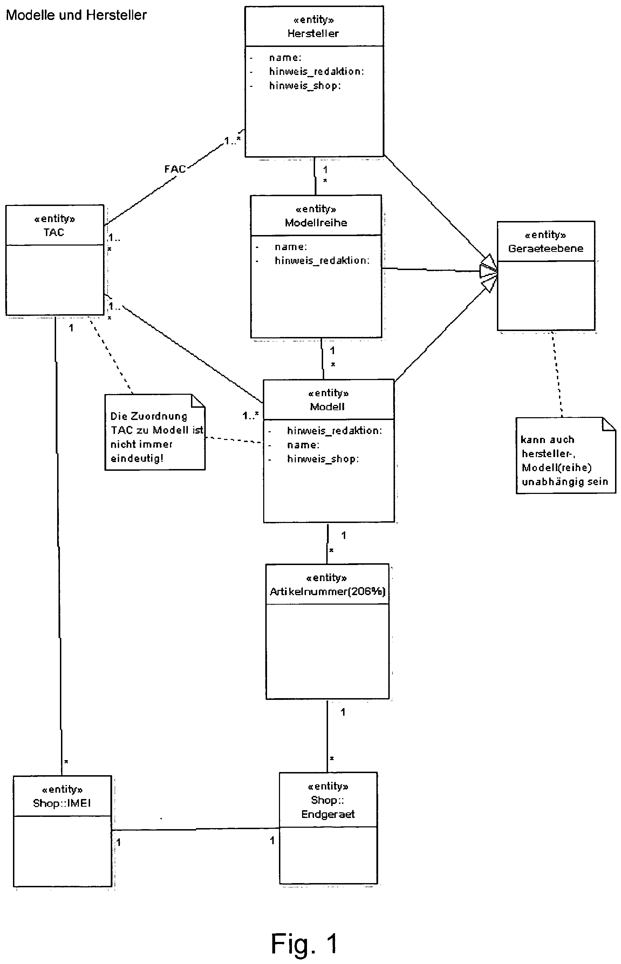

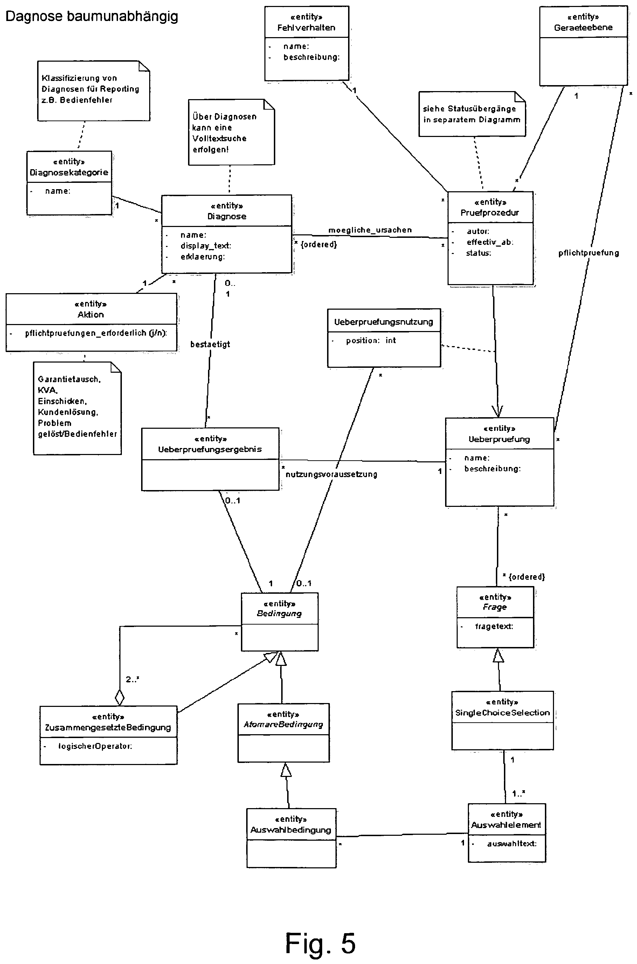

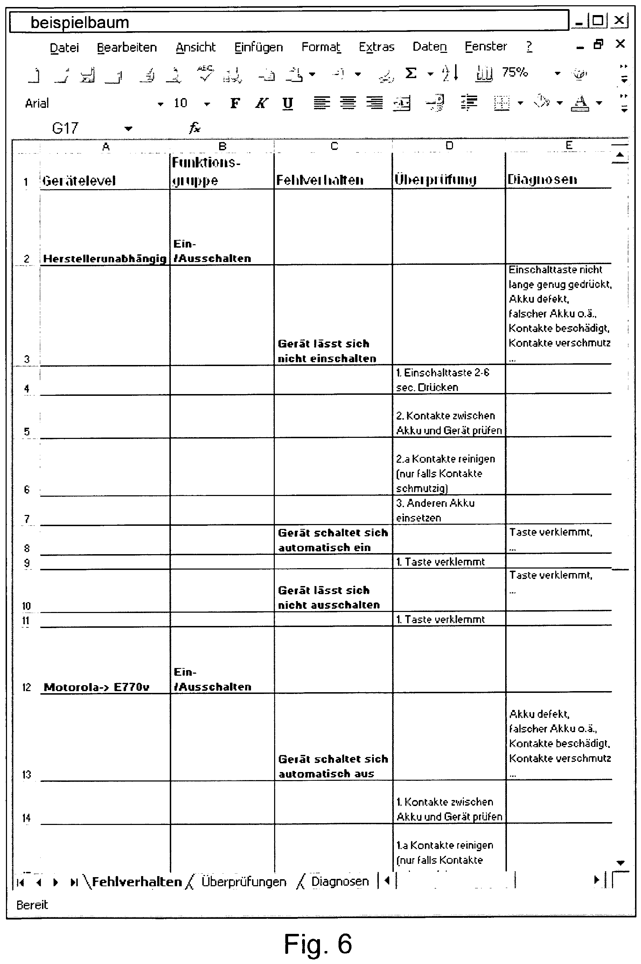

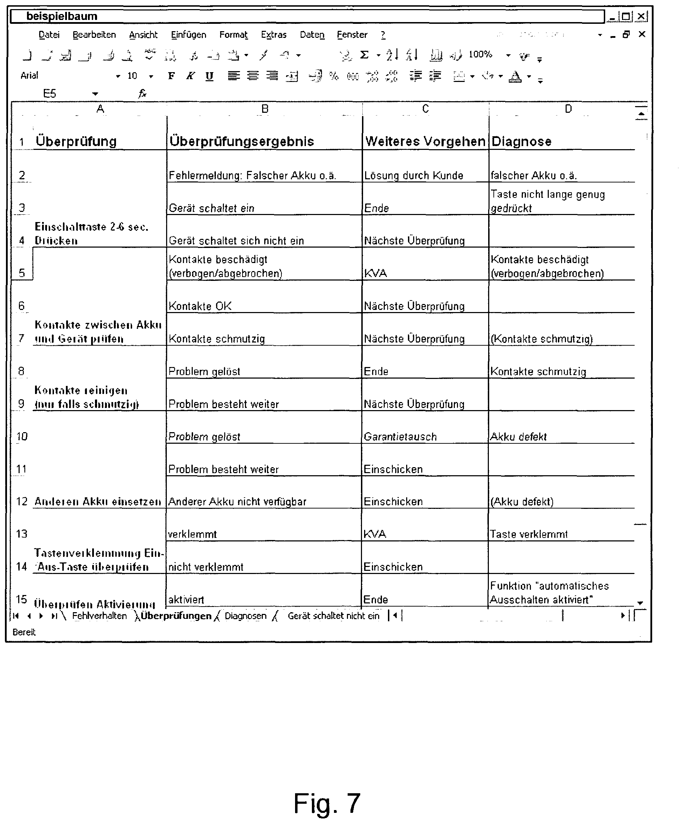

Fig. 1 bis Fig. 10 zeigen das dem erfindungsgemäßen System und einem nicht beanspruchten Verfahren zur zumindest teilautomatischen Analyse von Fehlverhalten eines in einem Telekommunikationsnetz betreibbaren Telekommunikationsendgerätes eines Kunden eines Telekommunikationsnetzbetreibers, insbesondere zur Vorbestimmung von Gewährleistungs- und/oder Garantieansprüchen des Kunden (Warranty Precheck), zugrundeliegende Domain Model und dessen Systemfunktionalitäten. Das Telekommunikationsnetz ist vorliegend ein Mobilfunknetz gemäß einem GSM-, GPRS- und/oder UMTS-Funknetzstandard. Das Kommunikationsendgerät ist vorliegend insbesondere ein mobiles Endgerät, vorzugsweise in Form eines Mobilfunktelefons gemäß einem GSM-, GPRS- und/oder UMTS-Funknetzstandard.

Das Domain Model (Fig. 1 bis Fig. 10) des damit erfindungsgemäß gegebenen Warranty Precheck Tools beschreibt die Geschäftsobjekte, deren Attribute und/oder Relationen als auch die Systemfunktionalitäten.

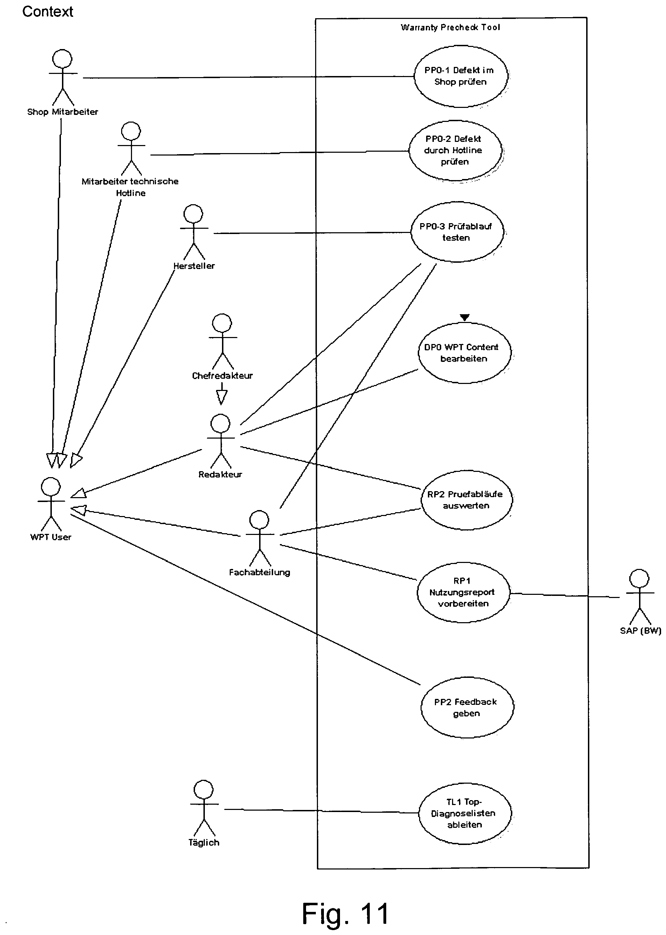

Details der Systemfunktionalitäten werden in Zusammenhang mit den in den Fig. 11 bis Fig. 18 skizzierten Anwendungsfällen (Use Case Model (Fig. 11 bis Fig. 18)) noch ausführlicher erläutert.

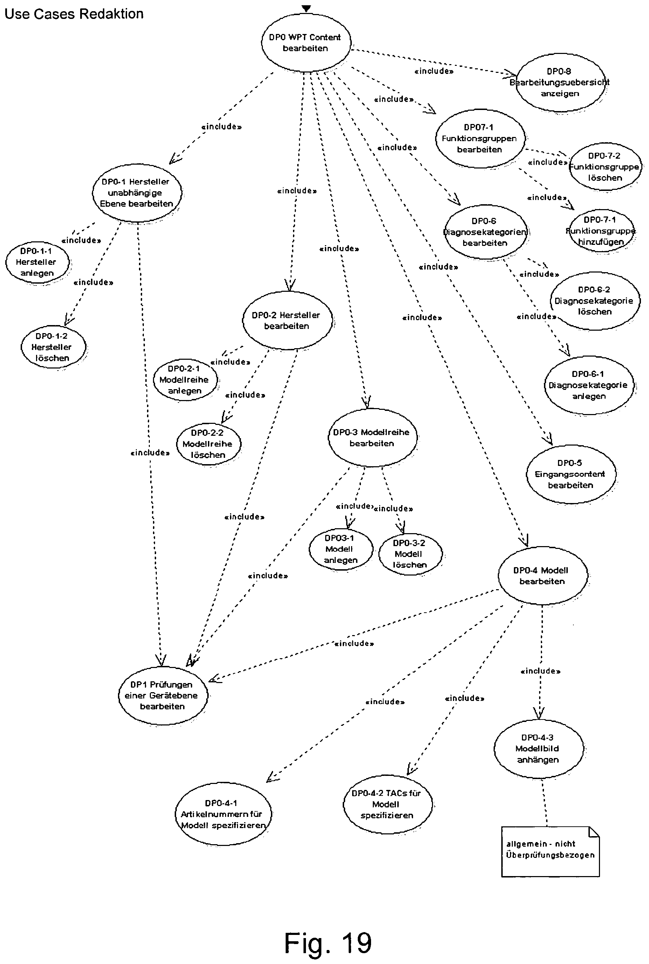

Details der Funktionalitäten der erfindungsgemäßen Redaktionsschnittstelle des erfindungsgemäßen Systems werden in Zusammenhang mit den in den Fig. 19 bis Fig. 22 skizzierten Anwendungsfällen (Use Cases Redaktion (Fig. 19 bis Fig. 22)) näher erläutert.

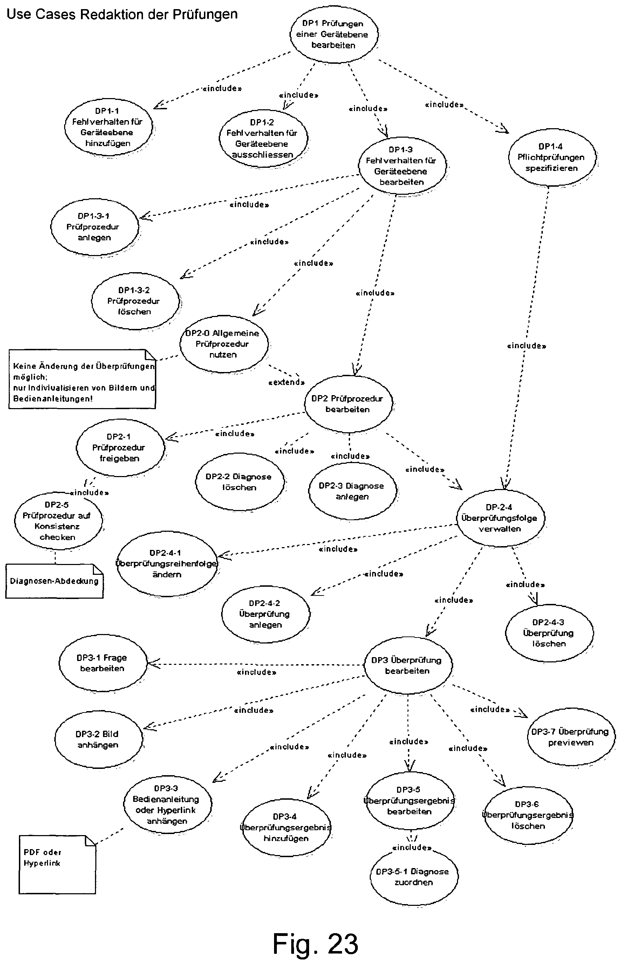

Die Funktionalität für die Bearbeitung der Prüfungen eines Gerätelevels (DP1) werden noch näher in Zusammenhang mit Fig. 23 ersichtlich.

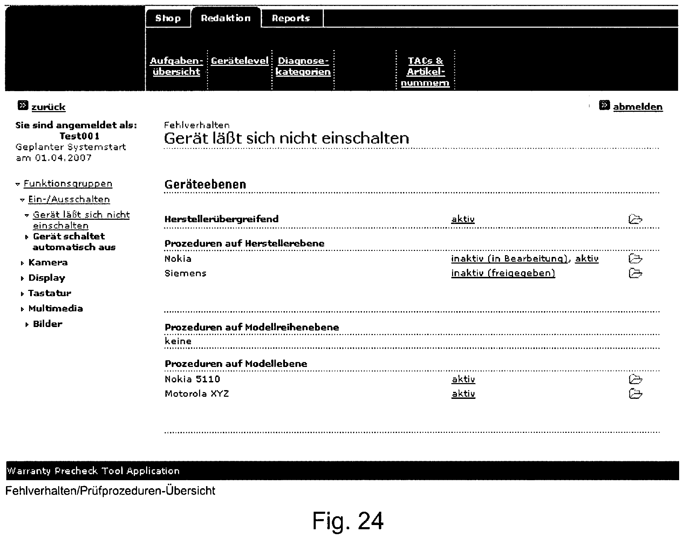

In Zusammenhang mit den in Fig. 24 bis Fig. 29 dargestellten Signalisierungen seitens einer Anzeigeeinrichtung einer Kundenserviceeinrichtung werden anhand ausgewählter Anwendungsfälle (Use Cases) weitere Funktionalitäten der Erfindung näher dargelegt.

Da es bei der Vielzahl der Objekte zu unübersichtlich wäre ein einziges Klassendiagramm zu verwenden, werden im Folgenden die wesentlichen Objekte aus verschiedenen Sichten beschrieben.

### I. Domain Model (Fig. 1 bis Fig. 10)

### 1. Modelle und Hersteller (Fig. 1)

Ein Hersteller stellt Endgeräte her, z.B. Nokia oder Motorola. Die Identifizierung des Herstellers im Shop (Kundenserviceeinrichtung) und Redaktion erfolgt über den Namen. Zu einem Hersteller kann es Hinweise geben, die im Shop oder für die Redaktion relevant sind. Hersteller stellen Modelle her, die zu Modellreihen gruppiert werden. Hersteller, Modellreihen und Modelle werden von der Redaktion gepflegt.

Eine Modellreihe bezieht sich eindeutig auf einen Hersteller und fasst gleichartige Modelle des Herstellers zusammen. Beispiel für eine Modellreihe ist etwa die Nokia 51er Reihe. Eine Modellreihe enthält ihren Namen und einen Hinweis für die Redaktion. Eine Modellreihe umfasst eine Menge von Modellen. Die Modellreihe spielt vorteilhafterweise keine Rolle bei der Auswahl eines Modells im Shop, sondern dient der Redaktion als Ebene zur Definition eines Prüfvorgehens für sämtliche Modelle einer Modellreihe.

Ein Modell gehört eindeutig zu einer Modellreihe, z.B. Nokia 5110 gehört zur Nokia 51er Reihe. Für Modelle eines Herstellers, die keiner Modellreihe zugeordnet werden können, gibt es vorteilhafterweise eine Dummy-Modellreihe "Sonstige Modelle". Für ein Modell gibt es einen Namen und Hinweise für Shop und Redaktion, welche angezeigt werden, sobald ein Modell gewählt worden ist.

Zu einem Modell können mehrere Artikelnummern gehören. Die Artikelnummer bildet darüber hinaus auch noch diagnoseirrelevante Spezifika wie beispielsweise die Farbgebung ab. Die Beziehung zwischen Modell und Artikelnummer ist vorteilhafterweise derart nutzbar, dass das Modell über die Artikelnummer zu identifizieren ist.

Ein Endgerät hat eine eindeutige Artikelnummer und wird eineindeutig identifiziert über die IMEI. Die IMEI (International Mobile Equipment Identity - 15 stellig) enthält die TAC (Type Approval Code - erste 8 Stellen der IMEI). Vor dem 01. April 2002 war die TAC 6-stellig und der Hersteller wurde über die 2 nachfolgenden Stellen der IMEI ermittelt, die so genannte FAC (Final Assembly Code). Aufgrund der Änderungen der IMEI Struktur ist nicht gewährleistet, dass aufgrund der TAC eindeutig ein Modell zugeordnet werden kann. Es gibt (bei älteren Geräten) sogar Fälle in denen eine TAC sogar mehreren Modellen verschiedener Hersteller zugeordnet werden konnte.

Die Ermittlung des Modells erfolgt vorliegend im Shop über die IMEI anhand der TAC. Da hierbei keine eindeutige Zuordnung gewährleistet ist, ist die Möglichkeit vorgesehen, die vorgeschlagene Modellzuordnung im Shop zu überschreiben.

Das Prüfvorgehen für bestimmte Probleme (Fehlverhalten) kann vorteilhafterweise entweder herstellerunabhängig, herstellerspezifisch, modellreihenspezifisch oder modellspezifisch definiert werden. Jede dieser vier Ebenen wird nachfolgend als eine Geräteebene beziehungsweise synonym als ein Gerätelevel bezeichnet.

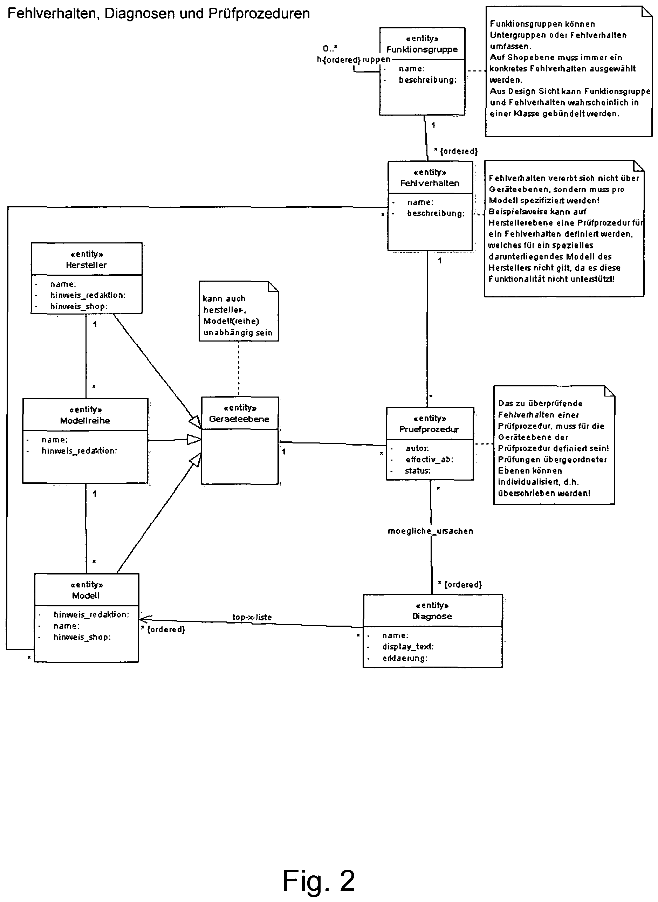

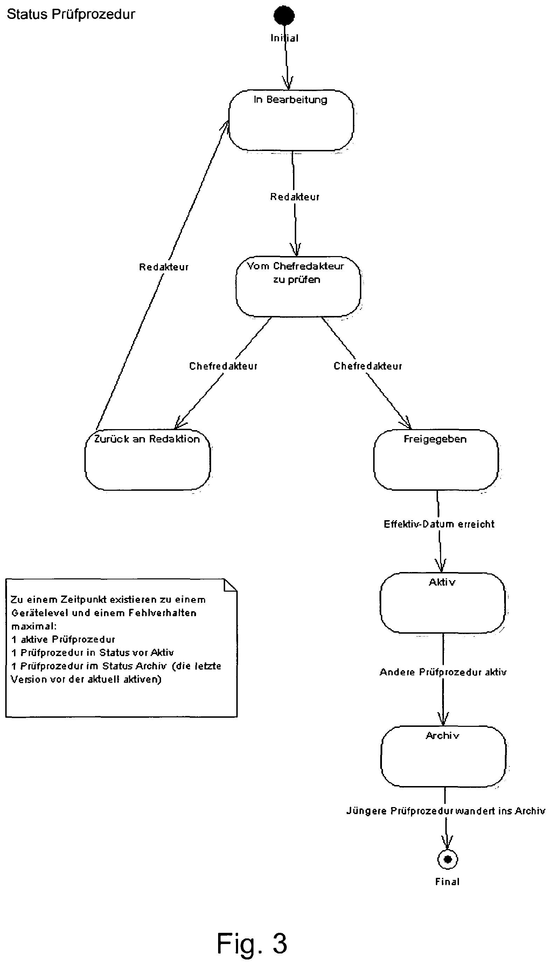

### 2. Fehlverhalten, Diagnosen und Prüfprozeduren (Fig. 2, Fig. 3)

Um ein Problem im Shop zu analysieren, muss dieses zunächst konkretisiert werden. Dies bedeutet, dass ein Fehlverhalten ausgewählt werden muss. Ein Fehlverhalten beschreibt das vorliegende Problem, z.B. "Gerät schaltet nicht ein" oder "Fotos unscharf".

Fehlverhalten sind in Funktionsgruppen gruppiert, die funktionale Bereiche abbilden, z.B. "Ein-/Ausschalten", "Kamera", "Multimedia". Funktionsbereiche können sich dabei bei Bedarf in Unter-Funktionsbereiche unterteilen (z.B. "Multimedia", "Audio" oder dergleichen), bevor sie auf Fehlverhalten heruntergebrochen werden. Im Shop wählt der Shop-Mitarbeiter beispielsweise zunächst eine Funktionsgruppe und dann ein dazugehöriges Fehlverhalten aus.

Die Reihenfolge der Unterfunktionsgruppen einer Funktionsgruppe bzw. Fehlverhalten einer Funktionsgruppe bestimmt die Reihenfolge der Anzeige im Shop.

Das Prüfvorgehen zu einem Fehlverhalten kann auf unterschiedlichen Geräteebenen definiert werden. Beispielsweise kann das Vorgehen für das Fehlverhalten "Gerät schaltet nicht aus" herstellerunabhängig definiert werden, da die möglichen Ursachen und durchzuführenden Untersuchungen bei allen Geräten gleich sind. Passt ein Modell, eine Modellreihe oder ein Hersteller nicht in dieses allgemeine Schema, so können für diese Modellreihe individuelle Prüfvorgehensweisen definiert werden. Beispielsweise gibt es für das Fehlverhalten "Gerät schaltet automatisch aus" individuelle Prüfungen für Siemens M65, da dieses Modell über eine Ausschaltautomatik verfügt.

Grundsätzlich gelten für ein Modell alle Fehlverhalten und dazugehörige Prüfprozeduren der übergeordneten Geräteebenen. Ist etwa zu dem Fehlverhalten "Fotos unscharf" ein herstellerunabhängiges Prüfvorgehen definiert, so gilt dies erst einmal für alle Modelle. Da dies jedoch für ein Modell ohne Kamera keinen Sinn macht ist es möglich, die einem Modell zugeordneten übergeordneten Fehlverhalten noch mal explizit auszuschließen (vergleiche Relation zwischen Modell und Fehlverhalten).

Das Prüfvorgehen zu einem Fehlverhalten und einem Gerätelevel wird in einer so genannten Prüfprozedur beschrieben. Eine Prüfprozedur kann unterschiedliche Status haben. Zu einem Zeitpunkt kann es zu einem Fehlverhalten und einer Geräteebene nur eine Prüfprozedur im Status "aktiv" geben, welche im Shop zur Prüfung verwendet wird. Gleichzeitig kann es eine Prüfprozedur im Status "Archiv" geben (die zuletzt aktive) und eine weitere im Status "In Bearbeitung", "Vom Chefredakteur zu prüfen", "zurück an die Redaktion" oder "freigegeben" (aber noch nicht aktiv, da späteres Effektiv-Datum).

Die genauen Zustandsübergänge und Berechtigungen sind beispielhaft den in Fig. 2 und Fig. 3 dargestellten Zustandsdiagrammen entnehmbar.

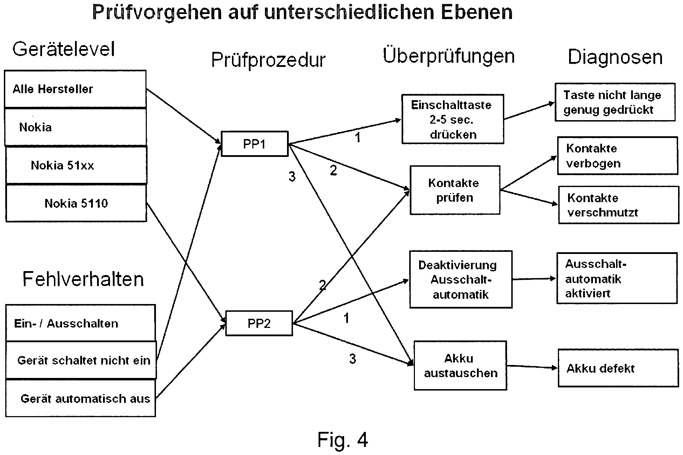

### 3. Überprüfungen, Überprüfungsergebnisse und Prüfprozeduren (Fig. 4, Fig. 5, Fig. 6, Fig. 7)

Bei der Definition des Prüfvorgehens einer Prüfprozedur gilt es zunächst die möglichen Ursachen (Diagnosen) des Fehlverhaltens zu benennen. Um diese Diagnosen auszuschließen oder zu bestätigen werden dann Überprüfungen durchgeführt. Überprüfungen und/oder Diagnosen sind wieder verwendbar und können somit in verschiedenen Prüfprozeduren genutzt werden. Dies ist beispielhaft in Fig. 4 dargestellt.

So werden beispielsweise die Überprüfungen "Kontakte prüfen" und "Akku austauschen" von verschiedenen Prüfprozeduren genutzt ("Gerät schaltet nicht ein/herstellerunabhängig" und "Gerät schaltet automatisch aus / Nokia 5110").

Eine Diagnose hat einen Namen (wird in der Redaktionssicht verwendet) einen Display Text (für den Shop, insbesondere die Top-Diagnoseliste) und eine Erklärung (Hilfe / Tooltipp im Shop). Über Diagnosen kann eine Volltextsuche erfolgen, d.h. hier erfolgt dabei eine entsprechende Indizierung. Der Diagnose ist eine Aktion zugeordnet, die der Empfehlung im Shop entspricht, welche bei Etablierung der Diagnose in einem konkreten Fall zu geben ist. Beispielhaft identifizierte Aktionen sind "Kostenvoranschlag (KVA)", "Einschicken", "Garantietausch", Nichts zu tun, da Bedienfehler" und "Problemlösung durch Kunde" (z.B. bei falschem Zubehör). Für jede Aktion kann vorteilhafterweise über ein Flag gesteuert werden, ob für die jeweilige Aktion Pflichtprüfungen ("Feuchtigkeitsprüfung", "Sichttest") erforderlich sind. Dies macht etwa bei Bedienfehlern wenig Sinn, während es für Servicefälle (Einschicken, KVA) obligatorisch ist. Diagnosen sind vorteilhafterweise in so genannten Diagnosekategorien gruppiert, um eine gezielte Auswertung im Reporting zu unterstützen. Im Gegensatz zu den der Diagnose zugeordneten Aktionen sind die Diagnosekategorien vorliegend als eine eher technische Klassifizierung der Diagnosen ausgebildet bzw. ausgestaltet, die für die Redaktion Sinn macht (etwa Diagnosekategorie "Softwarefehler").

Um in einer Prüfprozedur vom Fehlverhalten zu den Diagnosen zu kommen werden Überprüfungen in einer vorgegebenen Reihenfolge durchgeführt (vgl. Assoziationsklasse Überprüfungsnutzung). Diese Überprüfungen können an Bedingungen geknüpft sein, z.B. macht die Überprüfung "Kontakte reinigen" nur Sinn, falls die Kontakte verschmutzt sind. Die Reihenfolge der Überprüfungen richtet sich vorteilhafterweise nach Gründen der Wirtschaftlichkeit (einfach und schnell durchzuführende Untersuchungen zuerst) und Wahrscheinlichkeit der auszuschließenden Ursachen.

Überprüfungen können verschiedene Überprüfungsergebnisse haben. Beispielsweise kann die Überprüfung "Linse prüfen", die Überprüfungsergebnisse "Linse war verschmutzt und nach Reinigung Problem behoben", "Vorhandenen Schutzfilm abgezogen und Problem behoben" oder "Linse OK aber Problem besteht weiterhin" haben.

Einem Überprüfungsergebnis kann vorteilhafterweise eine Diagnose (die bestätigt wurde) zugeordnet werden. Dem Überprüfungsergebnis "Vorhandenen Schutzfilm abgezogen und Problem behoben" kann beispielsweise die Diagnose "Schutzfilm noch auf Linse" (mit Aktion "Nichts zu tun, da Bedienfehler") zugeordnet werden. Aufgrund des Überprüfungsergebnisses "Linse OK aber Problem besteht weiterhin" kann dann beispielsweise noch keine Diagnose gestellt werden.

Eine Überprüfung ist auf der Shopseite vorteilhafterweise mit Fragen verbunden. Vorteilhafterweise erfolgt vorliegend in der Regel eine einzige Single Choice Selection pro Überprüfung.

Ferner können Fragen prinzipiell auch weitere Typen haben, z.B. Offene Fragen, Multiple Choice Fragen, oder dergleichen. Beispielsweise kann es für eine sogenannte Blacklist-Prüfung nach defekten Akku-IDs sinnvoller sein eine offene Frage nach der vorhandenen Akku ID zu stellen, als eine entsprechende Single Choice Selection über die Blacklist vorzunehmen.

Von den Datenstrukturen sind vorteilhafterweise entsprechende Abstraktionen (Frage und Bedingung/ Atomare Bedingung) vorgesehen, die eine kostengünstige Erweiterung auf weitere Fragetypen erlauben.

Beispiele für Prüfprozeduren und Überprüfungen finden sich in Fig. 5. Diese resultieren auf dem für den Bereich "Ein-/Ausschalten" durchgeführten fachlichen Durchstich. Fig. 6 und Fig. 7 zeigen beispielhafte Anzeigen auf der Shopseite.

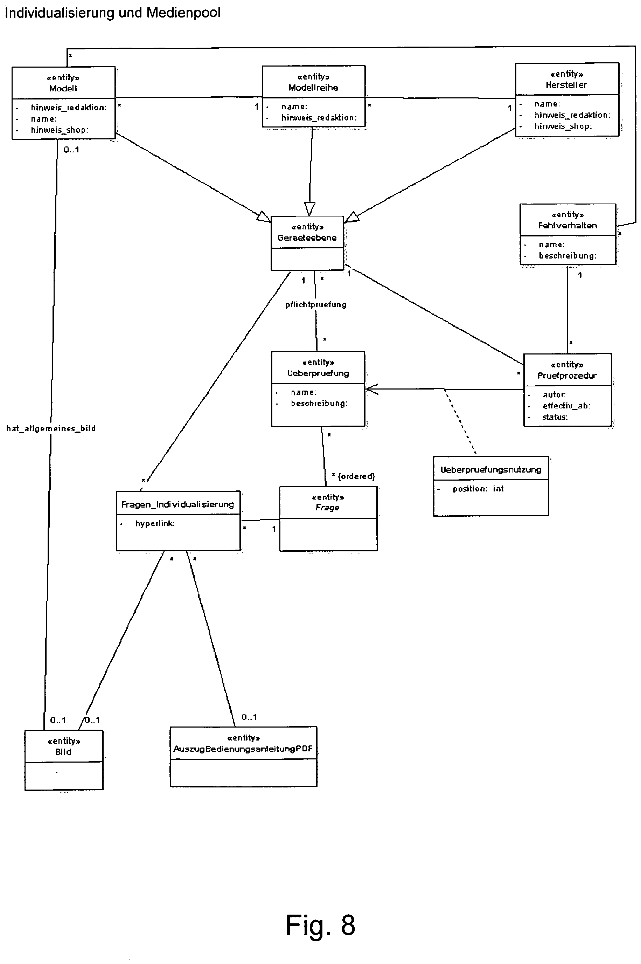

### 4. Individualisierung von Überprüfungen (Fig. 8)

Prüfprozeduren, die auf allgemeineren Geräteebenen definiert werden (z.B. vorteilhafterweise herstellerunabhängig) enthalten zwar allgemeine Überprüfungen und/oder Diagnosen, bedürfen aber ggf. einer modellspezifischen Bebilderung und/oder Anleitung.

Deshalb kann es für Fragen gerätelevelspezifische (insbesondere modellspezifische) Fragen-Individualisierungen geben. Diese können dann vorteilhafterweise einen individuellen Hyperlink (etwa auf Herstellerinformationen), ein individuelles Bild oder einen individuellen Auszug der Bedienanleitung (als PDF) enthalten. Ferner kann vorteilhafterweise ein Video wiedergegeben werden.

Im Shop wird dann für eine Frage die zu dem jeweiligen Modell passende Individualisierung angezeigt.

Mit einem Modell kann zusätzlich ein allgemeines Foto und/oder Video verknüpft werden, dass im Shop angezeigt wird, sobald das Modell bestätigt wurde.

Aufgrund der Bandbreiten in den Shops sollten Fotos kleiner als 100k und im Format 800x600 Pixel sein.

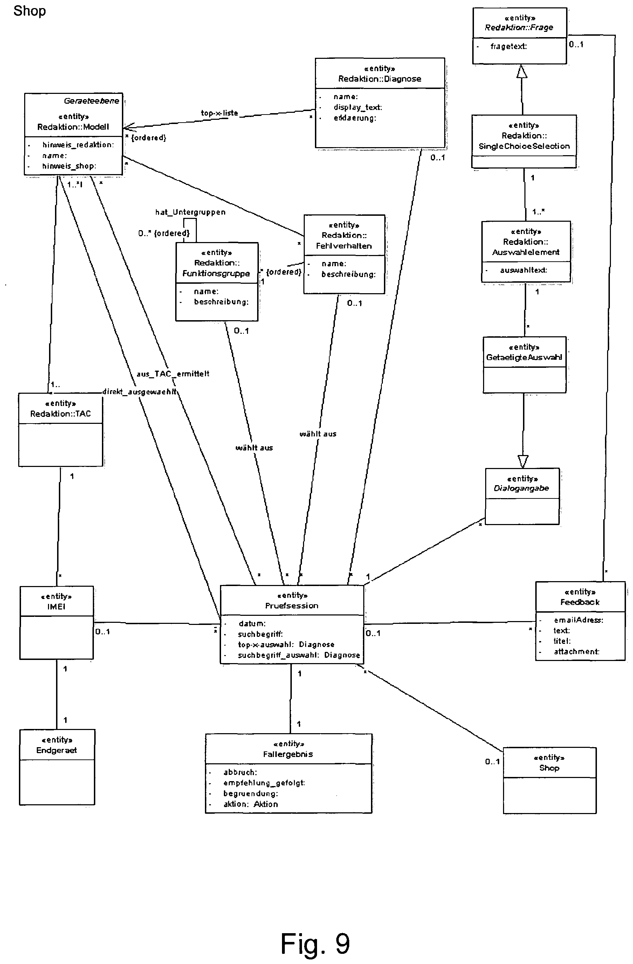

### 5. Shopobjekte (Fig. 9)

Im Zusammenhang mi Fig. 9 werden nachfolgend die Geschäftsobjekte beschrieben, die für die Analyse eines konkreten Problemfalls benötigt werden.

Zentral ist vorteilhafterweise die Prüfsession, welche alle fallspezifischen Informationen beinhaltet und/oder referenziert. Prüfdatum, Suchbegriff der Textsuche, und/oder ausgewählte Diagnose (aus einer Textsuche oder einer Top-Liste) werden direkt als Attribute verwaltet. Shop, IMEI, aus TAC ermitteltes Modell bzw. direkt ausgewähltes Modell, ausgewählte Funktionsgruppe, ausgewähltes Fehlverhalten und ermittelte Diagnose sind voreilhafterweise Referenzen der Prüfsession auf die entsprechenden Geschäftsobjekte.

Die Angaben des Shopmitarbeiters zu den Fragen der Überprüfungen werden vorteilhafterweise als Dialogangaben gehalten. Dies erfolgt vorteilhafterweise analog zu den in der Redaktion (nachfolgend im Zusammenhang mit den Fig. 19 bis Fig. 22 näher erläutert) definierten Fragen eine abstrakte Oberklasse die vorliegend vorteilhafterweise nur getätigte Auswahlen der Single Choice Selections unterstützt. Erweiterungen um zusätzliche Fragetypen sind über entsprechende Erweiterungen der Dialogangaben möglich. Für offene Fragen wird vorteilhafterweise eine Textangabe verwendet, welche die vom Shopmitarbeiter eingegebene Antwort enthält.

Das Fallergebnis einer Prüfsession beinhaltet vorteilhafterweise Informationen darüber, ob der Fall abgebrochen wurde, ob es eine Empfehlung (Aktion) gab und/oder ob die Empfehlung angenommen wurde. Im Falle des Abbruchs bzw. der Ablehnung der Empfehlung wird vorteilhafterweise eine entsprechende Begründung erfasst.

Ferner kann der Shop-Mitarbeiter zu jeder Frage vorteilhafterweise ein kontextbezogeneres Feedback geben, welches einen Betreff, den eigentlichen Feedbacktext, angehängte Dokumente (PDFs) und/oder die E-Mail Adresse oder dergleichen Kontaktinformation des Feedbackgebers enthält.

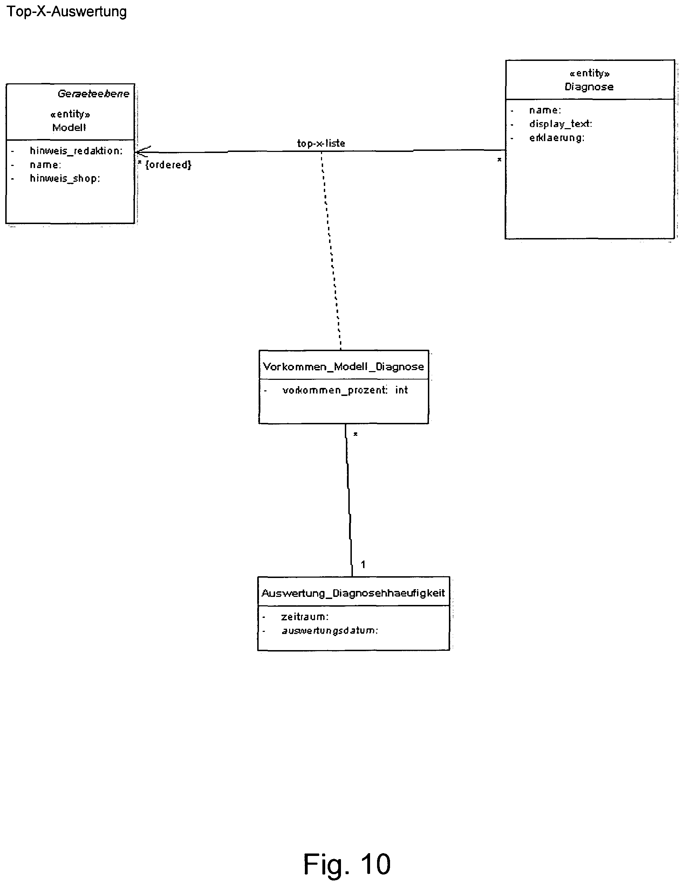

### 6. Auswertungen nach Diagnosen (Fig. 10)

In regelmäßigen Abständen, vorzugsweise einmal täglich, findet vorteilhafterweise eine Auswertung der häufigsten Diagnosen pro Modell statt. Die vorzugsweise maximal fünf häufigsten Diagnosen werden dem Shop-Mitarbeiter dann vorteilhafterweise nach Auswahl des jeweiligen Gerätemodells angezeigt.

Eine Auswertung der Diagnosehäufigkeit wird vorteilhafterweise an einem Auswertungsdatum durchgeführt und/oder kann Fälle aus einem festzulegenden Auswertungszeitraum betrachtbar machen. Die Dauer des Auswertungszeitraums kann vorteilhafterweise über eine Property vom Betrieb eingestellt werden und liegt vorzugsweise zwischen vier Wochen und drei Monaten.

Zu einer Auswertung werden für jedes vorkommende Modell und/oder jeder für das Modell vorgekommenen Diagnose der prozentuale Anteil der Diagnose an allen Fällen, die das Modell betreffen ermittelt (Vorkommen_Modell_Diagnose).

### II Use Case Model (Fig. 11 bis Fig. 23)

Nachfolgend wird die Funktionalität des Warranty Precheck Tools - nachfolgend auch WPT genannt - anhand von beispielhaften Anwendungsfällen bzw. -szenarien (Use Cases) näher erläutert. Dabei werden die Systemleistungen beispielhaft näher dargestellt und erläutert. Neben den eigentlichen textuellen Use Case Beschreibungen erfolgt dies mit Überblicksdiagrammen, insbesondere um die erfindungsgemäße Einbettung in den Gesamtkontext deutlich zu machen.

### 1. Use Case Overview (Fig. 11)

Fig. 11 gibt einen Überblick darüber wer mit dem System (WPT) arbeitet und welche Funktionalität es leisten soll. Details werden noch näher erläutert.

Die Kern-Anwendungsfälle PP0-1 und PP0-2 unterstützen den Shop-Mitarbeiter und die technische Hotline bei der Analyse eines Defekts. Hersteller, Redaktion und/oder Fachbereich können eine solche Analyse ebenfalls simulieren (PP0-3) und sind damit jederzeit über die Funktionalität im Shop informiert bzw. informierbar. Diese Use Cases werden nachfolgend in Ziffer 2. näher erläutert.

Shop-Mitarbeiter, Technische Hotline, Hersteller und/oder Fachbereich können jederzeit ein vorteilhafterweise kontextbezogenes Feedback an die Redaktion weitergeben (PP2).

Redakteur und Chefredakteur bearbeiten den WPT Content, d.h. Modelle, Fehlverhalten, Prüfprozeduren, Diagnosen und/oder Empfehlungen und geben diesen für die Nutzung in Shop und Hotline frei (DP0). Diese Use Cases werden nachfolgend in Ziffer 3. näher erläutert.

Fachbereich und/oder Redaktion können Auswertungen über die im WPT analysierten Fälle vornehmen. Zum einen kann die WPT Nutzung im Shop überprüft und mit den Servicefällen abgeglichen werden. Dazu werden von WPT entsprechende Informationen an SAP weitergereicht (RP1). Die eigentliche Erzeugung dieses Reports erfolgt in SAP. Ferner können vorteilhafterweise in WPT selber Reports zur Auswertung von Prüfabläufen und/oder Problemhäufungen vorgenommen bzw. durchgeführt werden (RP2).

Ferner werden vorliegend vorteilhafterweise täglich die häufigsten Diagnosen pro Modell neu ermittelt (TL1).

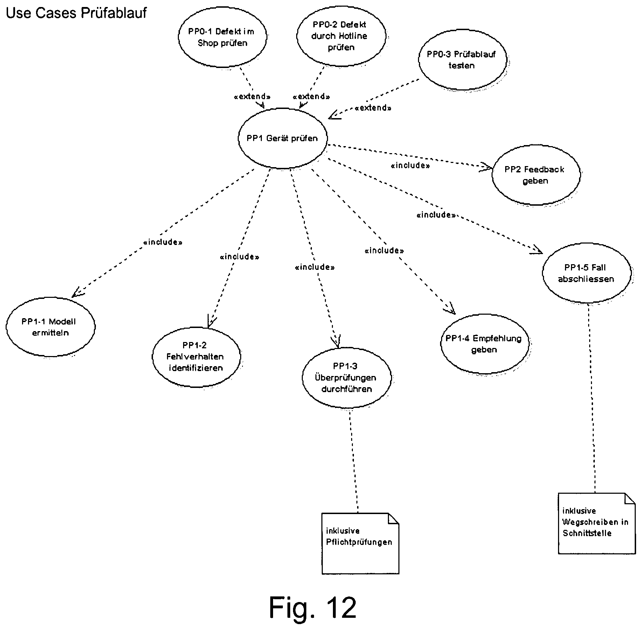

### 2. Use Cases Shop (Fig. 12 bis Fig. 18)

Die in Fig. 12 dargestellte Prüfprozedur PP1 ist der zentrale Use Case der den eigentlichen Ablauf einer erfindungsgemäßen Prüfung beschreibt. Diese kann von einem Shop-Mitarbeiter (PP0-1), von der technischen Hotline (PP0-2) oder zu Testzwecken von Hersteller, Redaktion oder Fachabteilung getriggert werden (PP0-3).

Um ein Gerät zu prüfen, müssen dabei beispielsweise das Modell ermittelt werden (PP1-1), das Fehlverhalten identifiziert werden (PP1-2), Überprüfungen durchgeführt werden (PP1-3) und eine Empfehlung gegeben werden (PP1-4). Zuletzt wird der Fall dann vorteilhafterweise gesichert und ein Protokoll erstellt (PP1-5).

Im Folgenden werden beispielhaft einzelne Use Cases im Detail beschrieben:

### 1. Use Case PP0-1 Defekt im Shop prüfen

Der Shop-Mitarbeiter erfasst die Kundendaten in einem entsprechenden System bzw. Anwendung (DASS) und analysiert das Problem im WPT. Er kann dann der WPT-Empfehlung folgen oder nicht und den Fall im DASS entsprechend weiterbearbeiten.

Trigger: Kunde kommt mit einem Problem zu seinem Endgerät in den Shop.
Input: Shop-ID
Result: Ein Fall wurde in WPT geprüft und für das Reporting gesichert.

Dabei ist folgender Ablauf gegeben:
1. Der Shop-Mitarbeiter löst den Aufruf von WPT aus DASS heraus aus. Dies erfolgt nach Erfassung der Kundendaten und IMEI in DASS. Der Aufruf aus DASS erfolgt über einen Link.
2. DASS übergibt die Shop ID und IMEI an WPT.
3. Der Shop-Mitarbeiter prüft den Fall in WPT (PP1 Gerät prüfen). Der Fall wird für das Reporting gesichert.
4. Der Shop-Mitarbeiter bucht einen Servicefall in DASS.
   4.a. In WPT wurde festgestellt, dass es sich um einen Bedienfehler handelt.
      4.a.1. Der Shop-Mitarbeiter bricht den DASS-Servicefall ab.
   4.b. In WPT wurde festgestellt, dass es sich um einen irreparablen Schaden handelt.
      4.b.2. Der Shop-Mitarbeiter bricht den DASS-Servicefall ab.

Der Shop-Mitarbeiter muss sich vorliegend in WPT nicht authentifizieren.

Bei Aufruf des WPT öffnet sich ein Browserfenster, welches bei Abschluss des Falls in WPT (Schritt 3) automatisch geschlossen wird.

Vorteilhafterweise wird die die Artikelnummer an WPT übergeben und WPT nimmt die Ermittlung des Modells über die von der Redaktion gepflegte Artikelnummer-Modell-Zuordnung vor.

### 2. Use Case PP0-2 Defekt durch Hotline prüfen

Die Technische Hotline authentifiziert sich und prüft einen oder mehrere Fälle in WPT (PP1 Gerät prüfen). Die Fälle werden für das Reporting gesichert.

Trigger: Kunde ruft an und möchte wegen eines Problems mit seinem Endgerät beraten werden.
Input: Hotline-WPT-Account
Result: Ein Fall wurde in WPT geprüft und für das Reporting und die Top-Auswertung gesichert.

Dabei ist folgender Ablauf gegeben:
1. Der Hotline-Mitarbeiter meldet sich im WPT mit dem WPT Benutzernamen und Passwort an.
2. Der Hotline-Mitarbeiter prüft einen Fall in WPT (PP1 Gerät prüfen). Der Fall wird für das Reporting gesichert.
3. Der Hotline-Mitarbeiter meldet sich ab.

Der Schritt 2 kann vorteilhafterweise beliebig oft wiederholt werden.

### 3. Use Case PP0-3 Prüfablauf testen

Der Benutzer authentifiziert sich und testet einen oder mehrere Fälle defekter Geräte (PP1 Gerät prüfen). Die Fälle werden vorliegend nicht für das Reporting gesichert.
Trigger: keiner
Input: WPT User ID und Passwort
Result: Ein Fall wurde in WPT geprüft, wird aber nicht für das Reporting oder die Top-Auswertung gesichert.

Dabei ist folgender Ablauf gegeben:
1. Der Benutzer meldet sich im WPT mit dem WPT Benutzernamen und Passwort an.
2. Der Benutzer prüft einen Fall in WPT (PP1 Gerät prüfen).
3. Der Benutzer meldet sich ab.

Der Schritt 2 kann vorteilhafterweise beliebig oft wiederholt werden.

Hersteller arbeiten dabei vorteilhafterweise mit einem anonymen Funktionsuser und sehen nur ihre eigenen Modelle.

### 4. Use Case PP1 Gerät prüfen

Der Benutzer analysiert das defekte Endgerät mit Hilfe des Warranty PreCheck Tools (WPT). Am Ende des Prüfvorgangs steht eine Empfehlung zum weiteren Vorgehen, der der Benutzer folgen oder die er ablehnen kann (PP1-4 Empfehlung geben). Anschließend wird der Fall für das Reporting protokolliert (PP1-5 Fall abschließen).

Zur Analyse des Problems werden vorliegend zunächst das Modell ermittelt (PP1-1 Modell ermitteln), dann das Fehlverhalten konkretisiert (PP1-2 Fehlverhalten identifizieren) und dann entsprechende Überprüfungen durchgeführt (PP1-3 Überprüfungen durchführen). Dies umfasst vorliegend auch modellspezifische Pflichtprüfungen.

Der Benutzer kann jederzeit kontextbezogen Feedback geben (PP2 Feedback geben).

Statt über das Fehlverhalten kann er auch über Top- oder über eine textuelle Diagnose-Suche zu den Pflichtüberprüfungen und der Empfehlung kommen.
Trigger: keiner
Input: IMEI, Modell/Hersteller; Betroffene Funktionsgruppe und Fehlverhalten; Antworten (Dialogangaben) zu den Überprüfungsfragen; Empfehlungsannahme bzw. -ablehnung und ggf. Begründung; Kontextbezogenes Feedback (Titel, Kommentar, E-Mail-Adresse und Name Feedbackgeber.
Result: Eine Empfehlung wird vorgeschlagen und der Fall wird protokolliert.

Dabei ist folgender Ablauf vorgesehen:
1. Das System ermittelt das Modell über die IMEI oder direkte Hersteller/Modellauswahl durch den Benutzer (PP1-1 Modell ermitteln).
2. Das System zeigt die für das Modell relevanten Fehlverhalten und häufigsten Probleme (Diagnosen) an.
3. Der Benutzer konkretisiert das vorliegende Fehlverhalten (PP1-2 Fehlverhalten spezifizieren).
4. Der Benutzer führt nach Anleitung durch das System Überprüfungen durch, um die Ursache des Fehlverhaltens zu identifizieren und irreparable Schäden und Bedienfehler auszuschließen. (PP1-3 Überprüfungen durchführen).
5. Das System gibt eine Empfehlung für das weitere Vorgehen, der der Benutzer folgen kann oder von der er abweichen kann. (PP1-4 Empfehlung geben).
6. Das System speichert die Falldaten und druckt ein Ergebnisprotokoll (PP1-5 Fall abschließen).

Alternativ und/oder ergänzend sind folgende Abläufe bzw. Ergänzungen und/oder Ausnahmen vorgesehen:
2.a. Der Benutzer hat in der Liste der häufigsten Probleme bereits das vorliegende Problem wieder erkannt.
2.a.1. Der Benutzer wählt eine der Diagnosen in der Top-Diagnosen-Liste des Modells.
2.a.2. Weiter mit Schritt 4 wobei das System nur noch Pflichtprüfungen durchführt - und diese auch nur falls die der Diagnose zugeordnete Aktion (z.B. KVA) Pflichtprüfungen erfordert.
2.b. Der Benutzer möchte textuell nach einem bestimmten Problem suchen.
2.b.1. Der Benutzer gibt einen Suchbegriff vor.
2.b.2. Das System zeigt dem Benutzer hierzu passende Problembegriffe (Diagnosen) an (max. 10). Es werden nur Diagnosen angezeigt, die für das vorliegende Modell Relevanz haben, d.h. in einer der dazugehörigen Prüfprozeduren verwandt werden.
2.b.3. Der Benutzer wählt eine der Diagnosen aus.
2.b.4. Weiter mit Schritt 4, wobei das System nur noch Pflichtprüfungen durchführt - und diese auch nur falls die der Diagnose zugeordnete Aktion (z.B. KVA) Pflichtprüfungen erfordert.
2.b.3.a. Das gesuchte Problem wurde nicht gefunden. Der Benutzer möchte mit neuem Begriff suchen.
2.b.3.a.1. Weiter mit Schritt 2.b.1.
2.b.3.b. Das gesuchte Problem wurde nicht gefunden. Der Benutzer möchte abbrechen
2.b.3.b.1. Weiter mit Schritt 2.
3.a. Der Benutzer möchte das Modell korrigieren
3.a.1. Der Benutzer selektiert die IMEI oder Modell-Eingabe als Navigationsziel.
3.a.1. Weiter mit Schritt 1
4.a. Der Benutzer möchte das Fehlverhalten korrigieren
4.a.1. Der Benutzer selektiert Funktionsgruppeneingabe oder Fehlverhalten als Navigationsziel.
4.a.2. Weiter mit Schritt 3.
4.b. Der Benutzer möchte das Modell korrigieren
4.b.1. Der Benutzer selektiert die IMEI oder Modell-Eingabe als Navigationsziel.
4.b.1. Weiter mit Schritt 1.
4.c. Der Benutzer möchte über Textsuche oder Häufigste Probleme fortfahren.
4.b.1. Der Benutzer selektiert den Funktionsgruppeneinstieg als Navigationsziel.
4.c.1. Weiter mit Schritt 2.
1-4 a. Der Benutzer möchte die Fallbearbeitung abbrechen.
a1. Der Benutzer bestätigt den Wunsch abzubrechen.
a2. Der Benutzer gibt den Grund für den Abbruch an (Freitext).
a3. Weiter mit Schritt 6.
1-4b. Der Benutzer möchte kontextbezogenes Feedback geben.
b1 Der Benutzer wählt die Feedbackfunktion auf dem Bildschirm, zu der er Feedback geben möchte.
b2. Das System bietet die Möglichkeit zur Eingabe eines Titels, eines Freitextes sowie Name und/oder E-Mail-Adresse des Feedbackgebers.

Hersteller arbeiten vorteilhafterweise mit einem anonymen Funktionsuser und sehen nur ihre eigenen Modelle.

Die Liste der häufigsten Probleme für ein Modell wird vorzugsweise täglich neu ermittelt (TL1 Top-Diagnosen ermitteln).

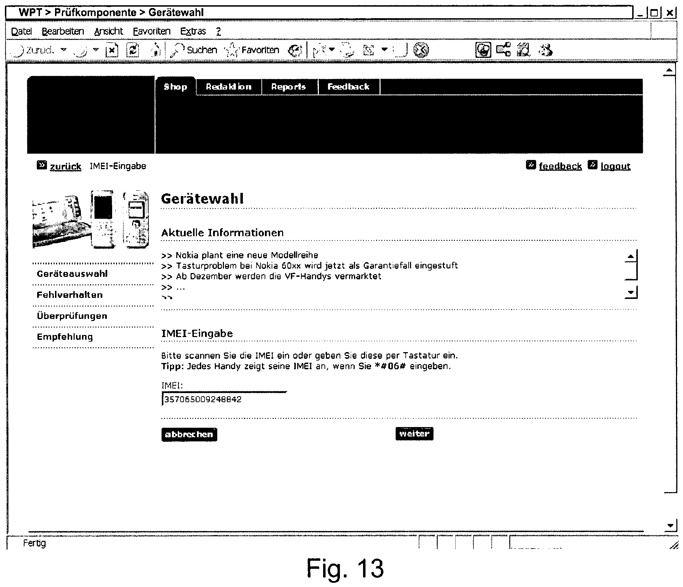

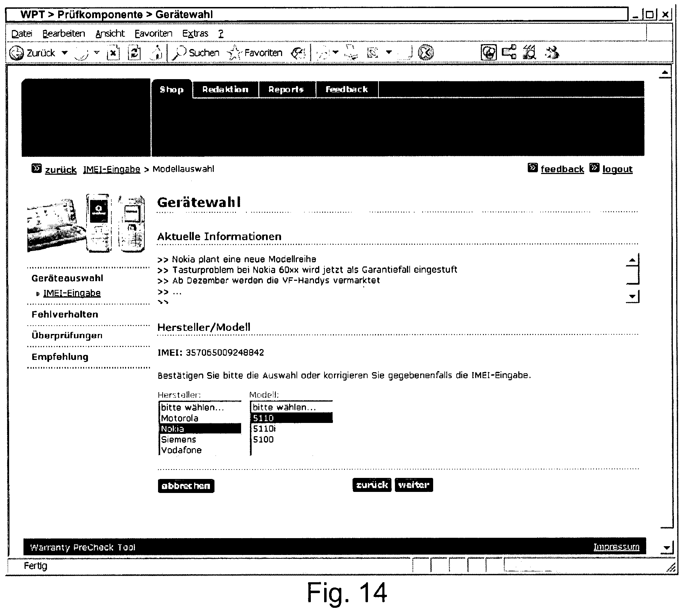

### 5. Use Case PP1 Model ermitteln (Fig. 13; Fig. 14)

Das Modell wird aufgrund der Angaben des Benutzers ermittelt. Je nach Benutzertyp (Shop-Mitarbeiter, Hotline, Redakteur, Fachbereich oder Hersteller) geschieht dies über Eingabe der IMEI oder direkte Auswahl von Hersteller und Modell. Die Ermittlung des Modells über die IMEI geschieht über die von der Redaktion gepflegte Zuordnung von TACs auf Modelle.
Trigger: keiner
Input: IMEI, Modell/Hersteller
Result: Das für die Geräteprüfung zu verwendende Modell wird festgelegt.

Dabei ist folgender Ablauf vorgesehen:
1. Der Benutzer gibt die IMEI des defekten Geräts an.
2. Das System zeigt alle Modelle und Hersteller, wobei das der IMEI zugeordnete Modell bereits ausgewählt ist (falls eine IMEI Angabe existiert und eine Zuordnung gemacht werden konnte).
3. Der Benutzer bestätigt das Modell.
4. Das System fährt in der Geräteprüfung fort (siehe übergeordneten Use Case PP1 Gerät prüfen).

Alternativ und/oder ergänzend sind folgende Abläufe bzw. Ergänzungen und/oder Ausnahmen vorgesehen:
1. entfällt für Shop-Mitarbeiter, Hersteller oder Fachbereich.

Weiter mit Schritt 2. wobei Hersteller nur ihre eigenen Modelle sehen können.
1.a. Die IMEI ist syntaktisch falsch (keine 15 Zeichen lang oder enthält ungültige Zeichen).
1.a.1. Das System gibt eine entsprechende Fehlermeldung.
1.a.2. weiter in Schritt 1
1.b. Die Prüfziffer der IMEI ist inkorrekt 1.a.1. Das System gibt eine entsprechende Fehlermeldung.
1.a.2. weiter mit Schritt 2.
2.a. Der IMEI können aufgrund der TAC-Zuordnung mehrere Modelle zugeordnet werden.
2.a.1. Das System gibt eine entsprechende Warnung.
2.a.2. Das System zeigt alle Hersteller und alle dazugehörigen Modelle an, wobei ein Modell dieser Zuordnung bereits vorselektiert ist.
2.a.3. weiter mit Schritt 3.
2.b. Der IMEI kann über die TAC-Zuordnung kein einziges Modell zugeordnet werden.
2.b.1. Das System protokolliert dies im Fallreport.
2.b.2. Das System zeigt alle Hersteller und alle dazugehörigen Modelle an.
2.b.3. Weiter in Schritt 3.
3.a. Es ist noch kein Modell ausgewählt oder der Benutzer möchte ein anderes Modell auswählen
3.a.1. Der Benutzer wählt ein Modell (über den Hersteller)
3.a.2. Das System protokolliert die Auswahl, falls sie von der TAC-Zuordnung abweicht.
3.a.2. Weiter in Schritt 4.
3.b. Der Benutzer möchte seine IMEI korrigieren (nur technische Hotline oder Redakteur)
3.b.1. Der Benutzer selektiert die IMEI Eingabe als Navigationsziel.
3.b.2. weiter in Schritt 1, wobei die bisherige IMEI bereits im Eingabefeld steht.

Die Artikelnummer wird beispielsweise an WPT übergeben und WPT nimmt die Ermittlung des Modells über die von der Redaktion gepflegte Artikelnummer-Modell-Zuordnung vor.

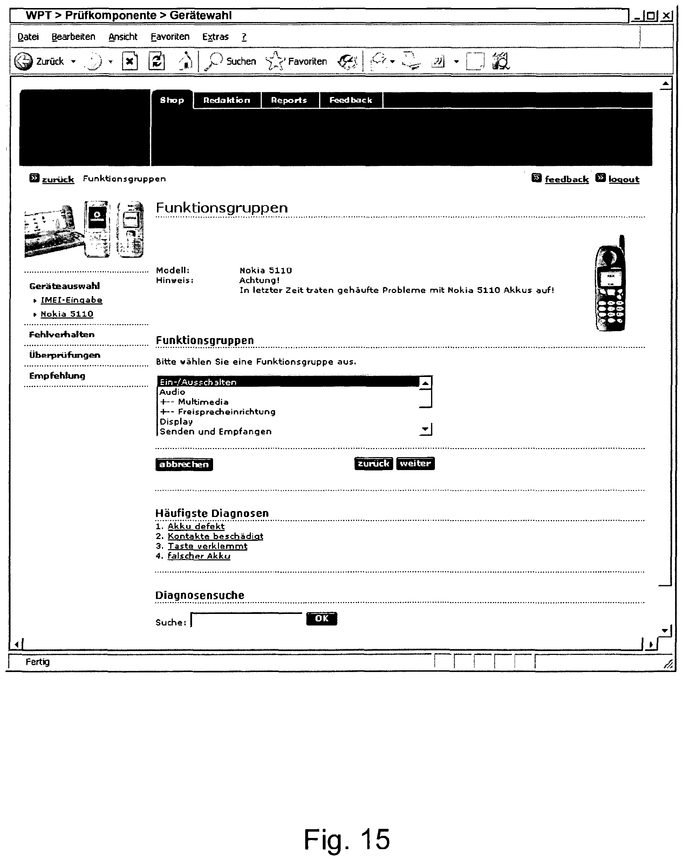

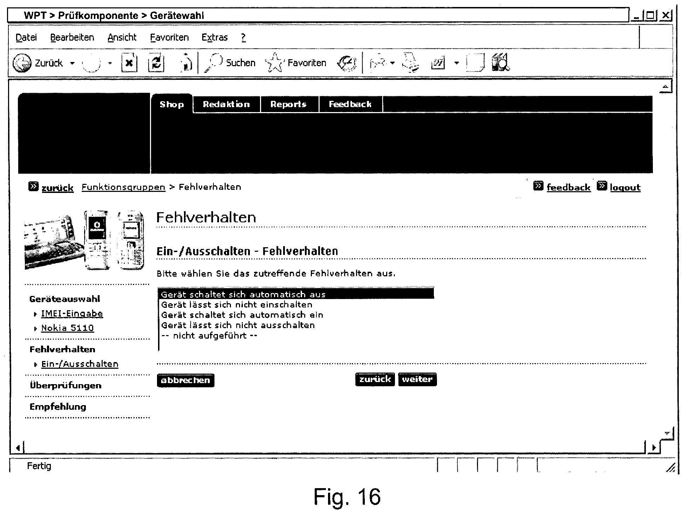

### 6. Use Case PP1-2 Fehlverhalten identifizieren (Fig. 15; Fig. 16)

Der Benutzer konkretisiert sein Problem indem er die entsprechende Funktionsgruppe und das entsprechende Fehlverhalten auswählt.
Trigger: keiner-
Input: Funktionsgruppe, Fehlverhalten.
Result: Das zu diagnostizierende Fehlverhalten wird festgelegt bzw. ermittelt. Das Modell des zu prüfenden Endgeräts ist identifiziert.

Dabei ist folgender Ablauf vorgesehen:
1. Das System zeigt die für das Modell relevanten Funktionsgruppen an d.h. Funktionsgruppen und UnterFunktionsgruppen, für die Fehlverhalten für dieses Modell definiert sind.
2. Der Benutzer wählt eine Funktionsgruppe aus.
3. Das System zeigt die zu dieser Funktionsgruppe und dem Modell relevanten Fehlverhalten an.
4. Der Benutzer wählt ein Fehlverhalten aus.
5. Das System übernimmt das Fehlverhalten für die Ermittlung der durchzuführenden Überprüfungen.

Alternativ und/oder ergänzend sind folgende Abläufe bzw. Ergänzungen und/oder Ausnahmen vorgesehen:
2.a. Es gibt keine Funktionsgruppe, die dem Problem des Benutzers entspricht.
2.a.1. Der Benutzer wählt den Punkt "nicht aufgeführt".
2.a.2. Das System fordert den Benutzer sein nicht zuordenbares Problem zu nennen.
2.a.3. Der Benutzer gibt sein Problem als Freitext ein.
2.a.4. Das System sendet sämtliche Informationen (Modell, Problem, Funktionsgruppenkontext) als E-Mail an die Redaktion (wpt@wptredaktion.de).
2.a.5. Weiter mit den Pflichtprüfungen für das Modell (PP1-3 Überprüfungen durchführen).
4.a. Es gibt kein Fehlverhalten, das dem Problem des Benutzers entspricht.
4.a.1. Der Benutzer wählt den Punkt "nicht aufgeführt".
4.a.2. Das System fordert den Benutzer sein nicht zuordnungsbares Problem zu nennen.
4.a.3. Der Benutzer gibt sein Problem als Freitext ein.
4.a.4. Das System sendet sämtliche Informationen (Modell, Funktionsgruppe, Problem) als E-Mail an die Redaktion (wpt@bertelsmann.de).
4.a.5. Weiter mit den Pflichtprüfungen für das Modell (PP1-3 Überprüfungen durchführen).
4.b. Der Benutzer möchte die Funktionsgruppenangabe korrigieren, da er erkannt hat, dass sein Problem unter einer anderen Funktionsgruppe zu finden sein muss.
4.b.1. Der Der Benutzer selektiert die Funktionsgruppe als Navigationsziel.
4.b.2. Weiter mit Schritt 1, wobei die in Schritt 2 ausgewählte Funktionsgruppe vorausgewählt ist.

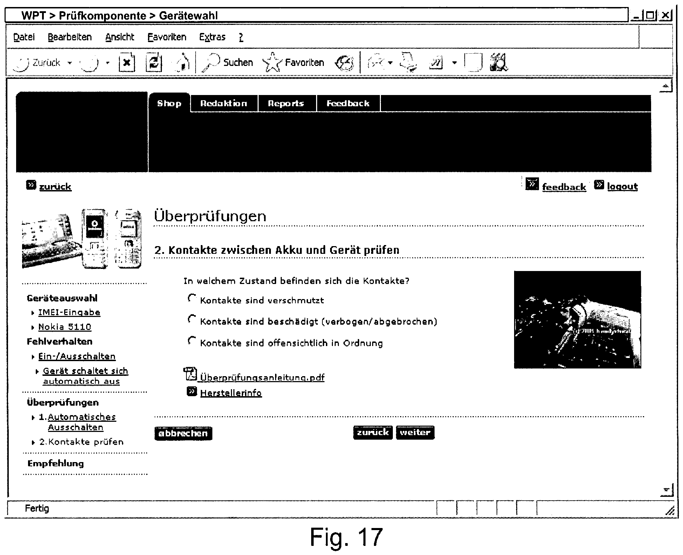

### 7. Use Case PP1-3 Überprüfungen durchführen (Fig. 17)

Der Benutzer führt nach Anleitung durch das System Überprüfungen durch, um die Ursache des Fehlverhaltens zu identifizieren und irreparable Schäden und Bedienfehler auszuschließen. Dies beinhaltet auch modellspezifische Pflichtprüfungen.
Trigger: keiner
Input: Antworten (Dialogeingaben) zu den mit den Überprüfungen verbundenen Fragen.
Result: Es kann im Normalfall eine Ursache (Diagnose) aufgrund der Überprüfungen ermittelt werden. Ansonsten wird die Ursache "aufgrund der vorliegenden Informationen nicht diagnostizierbar (Servicefall)" zugeordnet. Das Modell und Fehlverhalten des defekten Endgeräts ist identifiziert.

Dabei ist folgender Ablauf vorgesehen:
1. Das System ermittelt die spezifischste Prüfprozedur für das festgelegte Fehlverhalten und Modell. Je genauer der Gerätelevel desto spezifischer, d.h. modellspezifische Prüfprozeduren "überschreiben" etwa herstellerunabhängige Prüfprozeduren.
2. Das System ermittelt für die Prüfprozedur die Reihenfolge der durchzuführenden Überprüfungen. Am Schluss der Reihenfolge werden die für dieses Modell benötigten Pflichtprüfungen hinzugefügt.
3. Das System stellt sicher, dass die Bedingung für die nächste Überprüfung erfüllt ist. Pflichtprüfungen hängen von der aus den bisherigen Überprüfungen bestätigten Diagnose ab. Unterstützt die mit der Diagnose verbundene Aktion Pflichtprüfungen (z.B. KVA oder Servicefall buchen) so werden diese ausgeführt.
4. Das System führt die nächste Überprüfung durch, d.h. die damit verbundene Single Choice Frage wird dem Benutzer angezeigt. Falls vorhanden werden Beschreibung, modellspezifisches Foto, PDF und Hyperlink ebenfalls angezeigt.
5. Der Benutzer wählt eine der vorgegebenen Antworten aus.
6. Das System ermittelt das Überprüfungsergebnis (Bedingung über die Antworten).

Falls das Überprüfungsergebnis zu keiner Diagnose führt, wird mit der nächsten Überprüfung fortgefahren (Schritt 3). Falls die Nicht-Pflicht-Überprüfungen ohne Diagnose endeten wird die Ursache "aufgrund der vorliegenden Informationen nicht diagnostizierbar (Servicefall)" zugeordnet und mit den Pflichtprüfungen fortgefahren.

Falls das Überprüfungsergebnis zu einer Diagnose führt, wird die mit der Diagnose verbundene Aktion geprüft. Soll ein Servicefall gebucht werden (Einschicken, KVA), so wird mit den Pflichtprüfungen fortgefahren (Schritt 3). Ansonsten ist man fertig und kann direkt eine der Aktion entsprechende Empfehlung geben (PP1 Gerät prüfen).

Alternativ und/oder ergänzend sind folgende Abläufe bzw. Ergänzungen und/oder Ausnahmen vorgesehen:
3.a. Die Bedingung für die nächste Überprüfung ist nicht erfüllt.
3.a.1. Weiter mit der nachfolgenden Überprüfung und Schritt 3.

Durch das Klicken auf das Foto wird in einem separaten Fenster eine Großansicht des Fotos dargestellt.

PDFs werden auf Anklicken hin ebenfalls in separatem Fenster angezeigt.

Bei den Single Choice Fragen wird nicht grundsätzlich ein Punkt "Antwort nicht aufgeführt" hinzugefügt (siehe Fehlverhalten), da er oft keinen Sinn macht. Die Redaktion hat die Möglichkeit eine entsprechende Antwort dann hinzuzukonfigurieren, wenn es Sinn macht oder bei Bedarf.

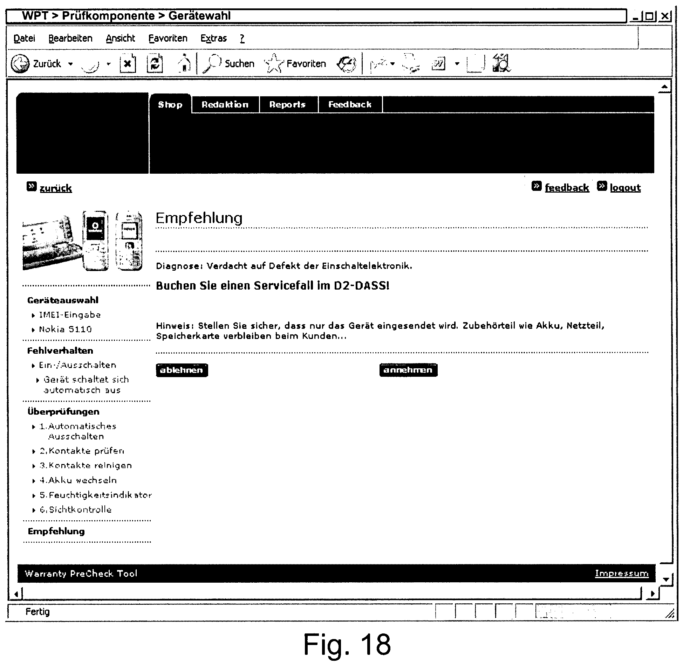

### 8. Use Case PP1-4 Empfehlung geben (Fig. 18)

Das System gibt eine Empfehlung für das weitere Vorgehen (z.B. Servicefall buchen), der der Benutzer folgen kann oder von der er abweichen kann.
Trigger: keiner
Input: Empfehlungsannahme oder -ablehnung
Result: Angenommene bzw. abgelehnte Empfehlung. Die Überprüfungen einschließlich Pflichtübungen wurden durchgeführt.

Dabei ist folgender Ablauf vorgesehen:
1. Das System ermittelt die Empfehlung entsprechend der in den Überprüfungen ermittelten Diagnose (siehe der Diagnose zugeordnete Aktion).
2. Das System zeigt einen der empfohlenen Aktion entsprechenden Empfehlungstext an. Der Benutzer wird aufgefordert die Empfehlung anzunehmen oder abzulehnen.
3. Der Benutzer nimmt die Empfehlung an.
4. Das System sichert die Empfehlungsannahme und fährt mit dem Abschluss des Falles fort (PP1 Gerät prüfen).

Alternativ und/oder ergänzend sind folgende Abläufe bzw. Ergänzungen und/oder Ausnahmen vorgesehen:
2.a. Bedienfehler wurde erfolgreich behoben, d.h. keine Empfehlung erforderlich
2.a.1. Das System zeigt an, dass das Problem gelöst wurde.
2.a.3. Der Benutzer bestätigt, um den Fall abzuschließen.
2.a.4. Weiter mit dem Fallabschluss (PP1 Gerät prüfen).
3.a. Der Benutzer nimmt die Empfehlung nicht an.
3.a.1. Das System fordert den Benutzer auf die Abweichung von der Empfehlung zu begründen.
3.a.2. Der Benutzer gibt eine Begründung der Empfehlungsabweichung an (Freitext).
3.a.3. Das System stellt sicher, dass keine leere Begründung angegeben wird.
3.a.4. Das System sichert die Begründung für die Abweichung von der Empfehlung Empfehlungsannahme und fährt mit dem Abschluss des Falles fort (PP1-Gerät prüfen).
3.a.3.a. Der Benutzer lässt die Begründung für die Empfehlungsabweichung leer.
3.a.3.a.1. Das System gibt eine entsprechende Warnmeldung.
3.a. 3.a.2. Weiter mit Schritt 3.a.1.

### 9. Use Case PP1-5 Fall abschließen

Das System speichert die Falldaten und gibt vorliegend durch Drucken ein Ergebnisprotokoll aus.
Trigger: keiner
Input: IMEI, Modell/Hersteller, Diagnose, Empfehlung, Empfehlungsannahme, -ablehnung.
Result: Der Fall wird gespeichert und ein Ergebnisprotokoll ausgegeben (gedruckt).

Dabei ist folgender Ablauf vorgesehen:
1. Das System erzeugt ein Ergebnisprotokoll, vorliegend im PDF-Format.
2. Das System zeigt dem Benutzer das PDF Protokoll in einem PDF-Viewer an.
3. Der Benutzer speichert das Protokoll oder druckt es aus und schließt den PDF Viewer.
4. Das System schließt den Prüfablauf ab und speichert die relevanten Daten (IMEI, Modell, Diagnose, Empfehlung, Empfehlungsannahme, -abweichung, Grund für Abweichung/Abbruch, Abbruch-Screen).

Ein Ergebnisprotokoll besteht vorliegend aus der Diagnose, dem Modell und Hersteller, der IMEI, dem Datum, der Empfehlung und ggf. den Gründen für eine Abweichung von der Empfehlung oder einen Abbruch.

### 3. Use Cases Redaktion (Fig. 19 bis Fig. 22)

Nachfolgend wird die Funktionalität der Redaktionsschnittstelle des WPT anhand von beispielhaften Anwendungsfällen bzw. -szenarien (Use Cases) näher erläutert.

Fig. 19 gibt einen Überblick über die Funktionalitäten der Redaktionsschnittstelle. Dabei werden die Systemleistungen beispielhaft näher dargestellt und erläutert. Neben den eigentlichen textuellen Use Case Beschreibungen erfolgt dies mit Überblicksdiagrammen, insbesondere um die erfindungsgemäße Einbettung in den Gesamtkontext deutlich zu machen.

Der Use Case DP0 "WPT Content bearbeiten" beinhaltet den Ein- und Ausstieg (An- und Abmeldung) sowie sämtliche für den Redakteur relevanten Änderungs- und Anzeigemöglichkeiten der prüfungsrelevanten Einstellungen. Dies umfasst die Anzeige der Bearbeitungsübersicht für den jeweiligen Redakteur (DP0-8), die Bearbeitung von Diagnosekategorien (DP0-7, DP-0-7-1, DP0-7-2), die Bearbeitung von Funktionsgruppen (DP0-6, DP-0-6-1, DP0-6-2), die Bearbeitung des Eingangscontents (DP0-5), sowie als zentrales Element die Bearbeitung der einzelnen Geräteebenen (DP0-1, DP0-2, DP0-3, DP0-4).

Die Bearbeitung der herstellerunabhängigen Ebene (DP0-1) beinhaltet neben der Pflege der auf dieser Ebene definierten Prüfprozeduren (DP1) vorteilhafterweise auch das Anlegen (DP0-1-1) und Löschen (DP0-1-2) von Herstellern.

Die Bearbeitung eines Herstellers (DP0-2) beinhaltet neben der Pflege der für den Hersteller definierten Prüfprozeduren (DP1) vorteilhafterweise auch das Bearbeiten herstellerspezifischer Stammdaten sowie das Anlegen (DP0-2-1) und Löschen (DP0-2-2) von Modellreihen dieses Herstellers.

Die Bearbeitung einer Modellreihe (DP0-3) beinhaltet vorteilhafterweise die Pflege der dort definierten Prüfprozeduren (DP1), das Bearbeiten modellreihenspezifischer Stammdaten sowie das Anlegen (DP0-3-1) und Löschen (DP0-3-2) von Modellen zu dieser Modellreihe.

Die Bearbeitung eines Modells (DP0-4) beinhaltet vorteilhafterweise neben der Pflege der modellspezifischen Prüfprozeduren (DP1) das Bearbeiten modellspezifischer Stammdaten, die Pflege der zugehörigen TACs (DP0-4-1) und Artikelnummern (DP0-4-2), sowie das Hochladen eines Modellfotos (DP0-4-3).

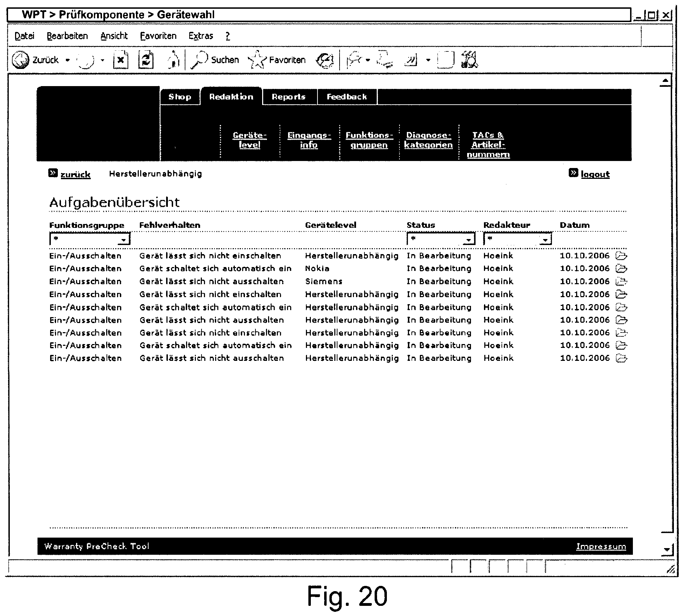

### 1. Use Case DP0 WPT Content bearbeiten (Fig. 20)

Der Redakteur bearbeitet Modelle, Fehlverhalten, Prüfprozeduren, Überprüfungen und/oder Diagnosen und gibt diese für die Nutzung in Shop und Hotline frei.

Dabei ist folgender Ablauf vorgesehen:
1. Der Redakteur meldet sich im WPT mit seinem Benutzernamen und Password an.
2. Das System zeigt dem Redakteur die Prüfprozeduren an, die er gerade bearbeitet oder die freizugeben sind. (DP0-8 Bearbeitungsübersicht anzeigen).
3. Der Redakteur bearbeitet herstellerunabhängige Informationen (DP0-1 Herstellerunabhängige Ebene bearbeiten).
4. Der Redakteur bearbeitet einen Hersteller (DP0-2 Hersteller bearbeiten).
5. Der Redakteur bearbeitet einen Modellreihe (DP0-3 Modellreihe bearbeiten).
6. Der Redakteur bearbeitet einen Modell (DP0-4 Modell bearbeiten).
7. Der Redakteur bearbeitet den Eingangscontent für die Shopkomponente (DP0-5 Eingangscontent bearbeiten).
8. Der Redakteur bearbeitet Diagnosekategorien (DP0-6 Diagnosekategorien bearbeiten).
9. Der Redakteur bearbeitet Funktionsgruppen (DP0-7 Funktionsgruppen bearbeiten).
10. Der Redakteur meldet sich ab.

Alternativ und/oder ergänzend sind folgende Abläufe bzw. Ergänzungen und/oder Ausnahmen vorgesehen:
Die Schritte 3 bis 9 können in beliebiger Reihenfolge durchlaufen werden. Einzelne Punkte können auch ausgelassen werden, je nach Bedarf.

### 2. Use Case DP0-1 Herstellerunabhängige Ebene bearbeiten (Fig. 21)

Der Redakteur bearbeitet herstellerunabhängige Prüfprozeduren und/oder Fehlverhalten, legt neue Hersteller an und/oder löscht bzw. verändert bestehende Hersteller.
Trigger: keiner
Input: Herstellerunabhängige Pflichtprüfungen, Prüfprozeduren und/oder Fehlverhalten (vgl. DP1 Prüfungen einer Geräteebene bearbeiten); Herstellerbezeichnung, -Redaktionshinweis und Shophinweis für neu anzulegende Hersteller; zu löschende bzw. zu modifizierende Hersteller.
Result: Angepasste herstellerunabhängige Pflichtprüfungen, Prüfprozeduren und/oder Fehlverhalten (siehe DP1 Prüfungen einer

Geräteebene bearbeiten) und/oder neuer Hersteller und/oder gelöschter bzw. modifizierter Hersteller

Dabei ist folgender Ablauf vorgesehen:
1. Das System zeigt alle Hersteller, sowie die herstellerunabhängigen Pflichtprüfungen, Fehlverhalten und Prüfprozeduren an.
2. Der Redakteur bearbeitet die herstellerunabhängigen Prüfprozeduren, Fehlverhalten und Pflichtprüfungen. (DP1 Prüfungen einer Geräteebene bearbeiten).
3. Der Redakteur legt einen neuen Hersteller an. (DP0-1-1 Hersteller anlegen).
4. Der Redakteur löscht einen vorhandenen Hersteller. (DP0-1-2 Hersteller löschen).

Alternativ und/oder ergänzend sind folgende Abläufe bzw. Ergänzungen und/oder Ausnahmen vorgesehen:
Die Schritte 1 bis 3 können in beliebiger Reihenfolge durchlaufen werden. Einzelne Punkte können auch ausgelassen werden, je nach Bedarf.

Beispielsweise können analog zur herstellerunabhängigen Ebene auch Ebenen für Hersteller, Modellgruppen und/oder Modellebenen vorgesehen sein, wie sie beispielsweise in den Figuren 21a, 21b und 21c dargestellt sind. Fig. 23 zeigt wie entsprechende Prüfungen einer Geräteebene bearbeitet werden:
Prüfungen einer Geräteebene bearbeiten (Fig. 23)

Die Funktionalität für die Bearbeitung der Prüfungen eines Gerätelevels (DP1) sind in Fig. 23 dargestellt.

Das erfindungsgemäße System stellt die für den Gerätelevel (DP1) relevanten Fehlverhalten und/oder dazugehörigen Prüfprozeduren dar. Der Redakteur kann Fehlverhalten hinzufügen, ausschließen, oder Prüfprozeduren zu einem Fehlverhalten bearbeiten. Darüberhinaus können die Pflichtprüfungen für den Gerätelevel festgelegt werden.
Trigger: keiner
Input: Gerätelevel; anzulegende, zu bearbeitende und/oder auszuschließende Fehlverhalten und/oder Prüfprozeduren; Pflichtprüfungen;
Result: Geänderte Fehlverhalten, Prüfprozeduren, Pflichtprüfungen für angegebenen Gerätelevel.

Dabei ist folgender Ablauf vorgesehen:
1. Das System zeigt an, welche Fehlverhalten für diesen Gerätelevel relevant sind. Für jedes Fehlverhalten wird vorteilhafterweise außerdem angezeigt, ob die dazu verwendende Prüfprozedur auf dem Gerätelevel selber oder auf übergeordneten Geräteleveln definiert wurde. Auf Modellebene werden zudem die häufigsten Diagnosen angezeigt, wie sie im Shop in der Top-Liste erscheinen.
   Vorteilhafterweise werden neben den relevanten auch die für dieses Gerätelevel durch Ausschluss unsichtbare Fehlverhalten angezeigt und zwar vorzugsweise ausgegraut und mit einem "wieder einblenden" Button versehen.
2. Der Redakteur fügt ein neues Fehlverhalten für die Geräteebene hinzu (DP1-1 Fehlverhalten für Geräteebene hinzufügen).
3. Der Redakteur blendet auf Modellebene ein ausgeblendetes Fehlverhalten wieder ein.
4. Der Redakteur schließt ein vorhandenes Fehlverhalten für die Geräteebene aus (DP1-2 Fehlverhalten für Geräteebene ausschließen).
5. Der Redakteur bearbeitet ein Fehlverhalten für die Geräteebene (DP1-3 Fehlverhalten für Geräteebene bearbeiten).
6. Der Redakteur legt die Pflichtprüfungen für die Geräteebene fest (DP1-4 Pflichtprüfungen für Geräteebene spezifizieren).

Alternativ und/oder ergänzend sind folgende Abläufe bzw. Ergänzungen und/oder Ausnahmen vorgesehen:
1. bis 6. können beliebig oft wiederholt werden;
2. bis 6. jeder der Schritte ist optional;

### 3. Use Case DPO-1-1 Hersteller anlegen

Der Redakteur legt einen neuen Hersteller an.
Trigger: keiner
Input: Herstellerbezeichnung; Redaktionshinweis (optional) und/oder Shophinweise (optional) für neu anzulegende Hersteller.
Result: Neuer Hersteller mit den spezifizierten Attributen.

Dabei ist folgender Ablauf vorgesehen:
1. Der Redakteur gibt Herstellerbezeichnung, Redaktionshinweis und Shophinweis für den neuen Hersteller an.
2. Das System stellt sicher, dass kein Hersteller mit gleicher Bezeichnung existiert.
3. Das System erzeugt den neuen Hersteller mit den spezifizierten Attributen.

Alternativ und/oder ergänzend sind folgende Abläufe bzw. Ergänzungen und/oder Ausnahmen vorgesehen:
1.a. Der Redakteur möchte den Vorgang abbrechen
1.a.1. Der Redakteur signalisiert, dass er den Vorgang abbrechen will.
1.a.2. Weiter im übergeordneten Use Case DP0-1.
2.a. Es existiert bereits ein Hersteller mit gleicher Bezeichnung.
2.a.1. Das System zeigt eine entsprechende Warnmeldung an.
2.a.2. Weiter mit Schritt 1.

### 4. Use Case DP0-1-1 Hersteller löschen

Der Redakteur löscht einen vorhandenen Hersteller.
Trigger: keiner
Input: Hersteller/Herstellerbezeichnung.
Result: Hersteller gelöscht.

Dabei ist folgender Ablauf vorgesehen:
1. Der Redakteur selektiert den zu löschenden Hersteller.
2. Das System stellt sicher, dass der Hersteller nicht in Falldaten verwendet wird und dass keine herstellerspezifischen Prüfprozeduren und Fehlverhalten mehr existieren.
3. Das System fragt nach, ob wirklich gelöscht werden soll und zeigt dazu die Stammmdaten des Herstellers noch mal an.
4. Der Redakteur bestätigt die Löschung.
5. Das System löscht den Hersteller.

Alternativ und/oder ergänzend sind folgende Abläufe bzw. Ergänzungen und/oder Ausnahmen vorgesehen:
2.a. Der Hersteller wird bereits in den Falldaten verwendet.
2.a.1. Das System zeigt an, dass der Hersteller wegen Referenzierung aus den Falldaten nicht gelöscht werden kann und bittet um Bestätigung dieser Info.
2.a.2. Der Benutzer bestätigt.
2.a.3. Weiter im übergeordneten Use Case.
2.b. Es existieren noch herstellerspezifische Prüfprozeduren und Fehlverhalten.
2.a.1. Das System zeigt an, dass zuerst die herstellerspezifischen Prüfprozeduren und Fehlverhalten gelöscht werden müssen und bittet um Bestätigung dieser Info.
2.b.3. Der Benutzer bestätigt.
2.b.3. Weiter im übergeordneten Use Case.
4.a.. Der Benutzer möchte nicht mehr löschen
4.a.1. Der Benutzer bricht die Löschung des Herstellers ab.
4.a.2. Weiter im übergeordneten Use Case.

### 5. Use Case DP0-4-1 Artikelnummern für Modell spezifizieren

Der Redakteur gibt an welche Artikelnummern zu einem Modell gehören.
Trigger: keiner
Input: Hersteller und Modell; Zu löschende und hinzuzufügende Artikelnummer.
Result: Die Zuordnung von Artikelnummern zu dem ausgewählten Modell wird entsprechend der zu löschenden und hinzuzufügenden Artikelnummern angepasst.

Dabei ist folgender Ablauf vorgesehen:
1. Der Redakteur wählt das zu bearbeitende Modell aus (über Hersteller)
2. Das System zeigt die dem Modell bisher zugeordneten Artikelnummern an.
3. Der Redakteur gibt eine Artikelnummer an und bestätigt, dass diese zu dem Modell hinzugefügt werden soll.
4. Das System stellt die syntaktische Korrektheit der Artikelnummer sicher.
5. Das System fügt die Artikelnummer zu dem Modell hinzu und zeigt die veränderte Artikelnummer-Zuordnung an.
6. Der Redakteur selektiert eine der zugeordneten Artikelnummern und bestätigt, dass diese vom Modell gelöscht werden soll.
7. Das System löscht die Zuordnung zu der entsprechenden Artikelnummer und zeigt die veränderte Artikelnummer-Zuordnung an.

Alternativ und/oder ergänzend sind folgende Abläufe bzw. Ergänzungen und/oder Ausnahmen vorgesehen:
1. optional für Einstieg über DP-0-4 Modell bearbeiten, da Modell dann bereits selektiert;
3. bis 5. sind optional;
6., 7. sind optional;
3. bis 6. können für ein Modell beliebig oft durchlaufen werden;
1. bis 7. können beliebig oft durchlaufen werden, d.h. es ist möglich direkt im Anschluss an ein Modell ein weiteres zu bearbeiten;
4.a. Der Redakteur gibt einen syntaktisch unzulässige Artikelnummer an (nicht numerisch und keine 8 Stellen);
4.a.1. Das System zeigt eine entsprechende Fehlermeldung an;
4.a.2. weiter mit Schritt 3.

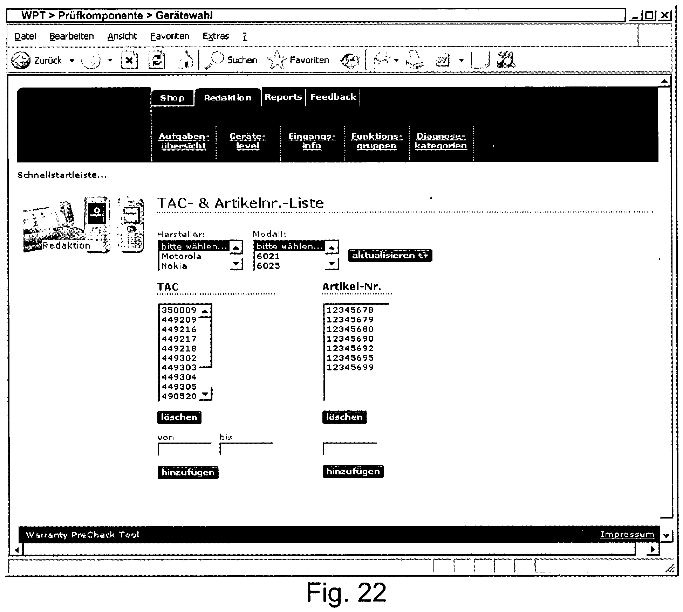

### 6. Use Case DP0-4-2 TACs für Modell spezifizieren (Fig. 22)

Der Redakteur gibt an welche TACs zu einem Modell gehören.
Trigger: keiner
Input: Hersteller und Modell; Hinzuzufügende TAC bzw. TAC-Bereiche; zu löschende TACs.
Result: Die Zuordnung von TACs zu dem ausgewählten Modell wird entsprechend der zu löschenden und hinzuzufügenden TACs angepasst.

Dabei ist folgender Ablauf vorgesehen:
1. Der Redakteur wählt das zu bearbeitende Modell aus (über Hersteller)
2. Das System zeigt die dem Modell bisher zugeordneten TACs an.
3. Der Redakteur gibt einen TAC-Bereich an (durch Eingabe der ersten und der letzten TAC des Bereichs) und bestätigt, dass diese zu dem Modell hinzugefügt werden soll.
4. Das System stellt die syntaktische Korrektheit des TAC Bereichs sicher.
5. Das System fügt die spezifizierten TACs zu der Modell-TAC-Zuordnung hinzu und zeigt die veränderte Modell-TAC-Zuordnung an.
6. Der Redakteur selektiert eine der zugeordneten TACs und bestätigt, dass diese vom Modell gelöscht werden soll.
7. Das System löscht die Zuordnung zu der entsprechenden TAC und zeigt die veränderte TAC-Zuordnung an.

Alternativ und/oder ergänzend sind folgende Abläufe bzw. Ergänzungen und/oder Ausnahmen vorgesehen:
1. optional für Einstieg über DP-0-4 Modell bearbeiten, da Modell dann bereits selektiert;
3. bis 5. sind optional;
6., 7. sind optional;
3. bis 6. können für ein Modell beliebig oft durchlaufen werden;
1. bis 7. können beliebig oft durchlaufen werden, d.h. es ist möglich direkt im Anschluss an ein Modell ein weiteres zu bearbeiten;
4.a. Der Redakteur gibt einen unzulässigen TAC-Bereich an. (TAC enthält nichtnumerische Zeichen, ist zu kurz bzw. lang oder TAC-von ist grösser al TAC-bis);
4.a.1. Das System zeigt eine entsprechende Fehlermeldung an;
4.a.2. weiter mit Schritt 3.

### III Weitere Use Case Models (Fig. 24 bis Fig. 29)

Nachfolgend werden weitere Funktionalitäten des Warranty Precheck Tools (WPT) anhand von beispielhaften Anwendungsfällen bzw. -szenarien (Use Cases) näher erläutert. Dabei werden die Systemleistungen beispielhaft näher dargestellt und erläutert. Neben den eigentlichen textuellen Use Case Beschreibungen erfolgt dies mit Überblicksdiagrammen, insbesondere um die erfindungsgemäße Einbettung in den Gesamtkontext deutlich zu machen.

### 1. Use Case CR-DP1 Fehlverhalten-Prüfprozeduren-Übersicht anzeigen (Fig. 24)

Das erfindungsgenmäße System erstellt eine Übersicht über alle Prüfprozeduren, welche zum zuvor ausgewählten Fehlverhalten definiert sind.
Trigger: keiner
Input: Fehlverhalten
Result: Es wird eine Liste aller Prüfprozeduren zum gewählten Fehlverhalten geordnet nach Geräteebenen angezeigt. Dabei werden jeweils pro "Geräteebenenblock" die Attribute Geräteebenenname, Prüfprozedurvarianten einschließlich Status, und/oder Verknüpfungen (Linkziele) dargestellt.

Dabei ist folgender Ablauf vorgesehen:
1. Das System zeigt die Liste aller Prüfprozeduren pro Geräteebene an.
2. Der Redakteur wählt eine Prüfprozedurvariante zur weiteren Bearbeitung aus.
3. Das System verzweigt in die Prüfprozedurvariante zur weiteren Bearbeitung.
4. Der Redakteur navigiert mittels "zurück" wieder in die Liste der Prüfprozeduren.

Alternativ und/oder ergänzend sind folgende Abläufe bzw. Ergänzungen und/oder Ausnahmen vorgesehen:
1.a. Die Liste der Prüfprozeduren ist leer.
1.a.1. Das System zeigt eine leere Liste mit einem entsprechenden Hinweis.

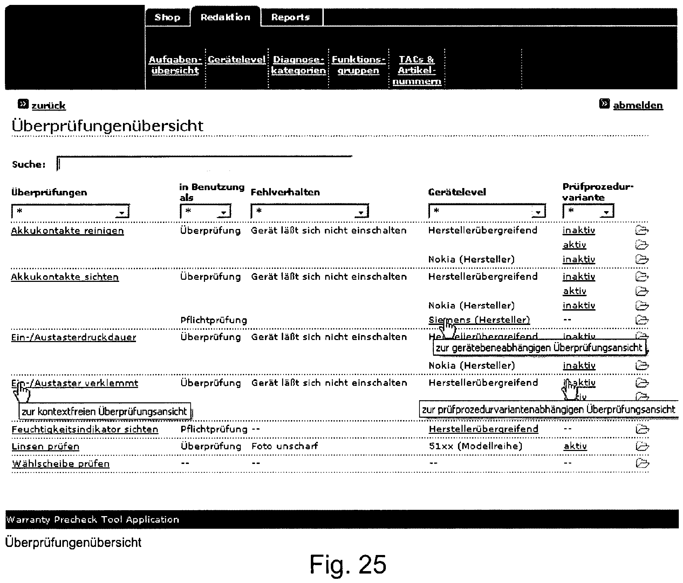

### 2. Use Case CR-DP2 Überprüfungen-Übersicht anzeigen (Fig. 25)

Das erfindungsgenmäße System erstellt eine Übersicht über alle im System vorhandenen Überprüfungen. Darüber hinaus kann die Liste nach Überprüfungsnamen, Überprüfungstyp (Überprüfung innerhalb einer Prüfprozedur oder Pflichtprüfung), Fehlverhalten, Gerätelevel und Prüfprozedurvariante (Status) gefiltert werden. Zusätzlich kann über eine Volltextsuche über nach Überprüfungsnamen und Fehlverhaltennamen gefiltert werden.

Trigger: Aufruf des Menüpunktes "Überprüfungen"; Start der Redaktionskomponente oder Initiierung durch Redakteur.

Input: Filterkriterien für Überprüfungen (Überprüfungsnamen, Überprüfungstyp, Fehlverhalten, Gerätelevel, Prüfprozedurvariante).

Result: Liste aller Überprüfungen, die im System existent sind. Liste der Überprüfungen, welche die vorgegebenen Filterkriterien erfüllen. Dabei werden jeweils pro Überprüfung je nach Typ die Attribute "Überprüfung an Prüfprozedur" umfassend "Überprüfungsname", "Überprüfungstyp", "Fehlverhaltenname", "Gerätelevel" und/oder "Prüfprozedurvariante (Status)" und/oder "Pflichtprüfung" umfassend "Überprüfungsname", "Überprüfungstyp", "Gerätelevel" und/oder Verknüpfungen (Linkziele) angezeigt bzw. dargestellt.

Dabei ist folgender Ablauf vorgesehen:
1. Das System zeigt die Liste aller Überprüfungen an.
2. Der Redakteur gibt Filterkriterien für Überprüfungen (s.o.) vor und bestätigt diese.
3. Das System zeigt die Liste der Überprüfungen, welche die vorgegebenen Filterkriterien erfüllen.
4. Der Redakteur wählt eine Überprüfung zur weiteren Bearbeitung aus.
5. Das System verzweigt in die Überprüfung zur weiteren Bearbeitung (DP2 Prüfprozedur bearbeiten).

Alternativ und/oder ergänzend sind folgende Abläufe bzw. Ergänzungen und/oder Ausnahmen vorgesehen:
Schritt 2. und 3., 4. end 5. sind optional.
Schritt 2. und 3. kann beliebig oft wiederholt werden
   1.a. Die Liste der Überprüfungen ist leer.
   1.a.1. Das System zeigt eine leere Liste mit einem entsprechenden Hinweis.
   3.a. Die Liste der zu filternden Überprüfungen ist leer.
   3.a.1. Das System zeigt eine leere Liste mit einem entsprechenden Hinweis.
   3.a.2. Weiter mit Schritt 2.

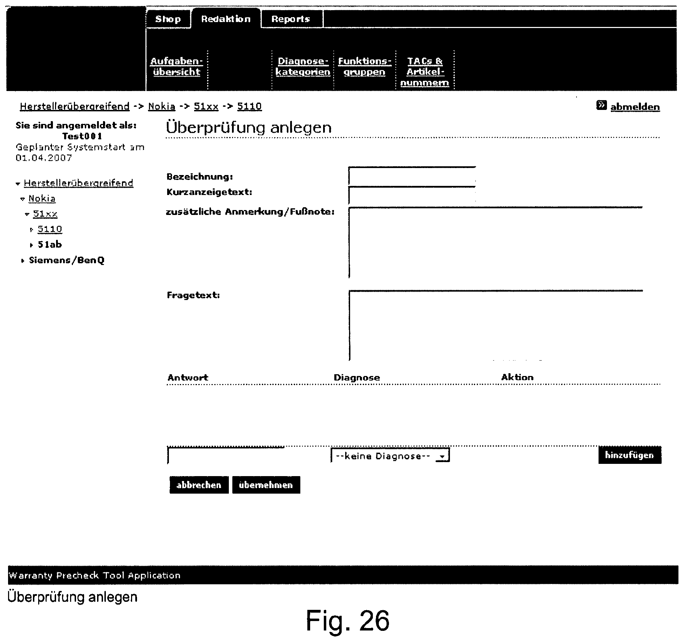

### 3. Use Case CR-DP3 Überprüfung anlegen (Fig. 26)

Der Redakteur legt eine Überprüfung an. Dazu gibt er Name, Bezeichnung, Beschreibung, Fragetext und/oder Überprüfungsergebnisse (ggf. einschließlich bestätigter Diagnose) an.
Trigger: keiner
Input: Prüfprozedur (leer falls Einstieg über Pflichtprüfungen); Überprüfungsbezeichnungsname, -beschreibung und/oder --ergebnisse (Auswahltext); für jedes Überprüfungsergebnis ggf. eine dadurch bestätigte Diagnose.
Result: Neue Überprüfung mit vorgegebener Spezifikation.

Dabei ist folgender Ablauf vorgesehen:
1. Der Redakteur gibt die Überprüfungsbezeichnung, den Kurzanzeigetext, eine optionale Anmerkung, den Fragetext und zugehörige Antworten (mindestens eine) inkl. Diagnose ein und bestätigt die Angaben.
2. Der Redakteur sortiert die Antworten und/oder korrigiert seine Eingaben bis er diese bestätigt.
3. Das System legt die neue Überprüfung inkl. Frage und Antworten entsprechend der Vorgaben an.
4. Der Redakteur bearbeitet die Überprüfung.

Alternativ und/oder ergänzend sind folgende Abläufe bzw. Ergänzungen und/oder Ausnahmen vorgesehen:
1.a. Der Redakteur möchte den Vorgang abbrechen.
1.a.1. Der Redakteur initiiert das Abbrechen des Vorgangs.
1.a.2. Weiter im übergeordneten Use Case, so dass das Anlegen der neuen Pflichtprüfung bzw. Überprüfung für Prüfprozedur abgebrochen wird.

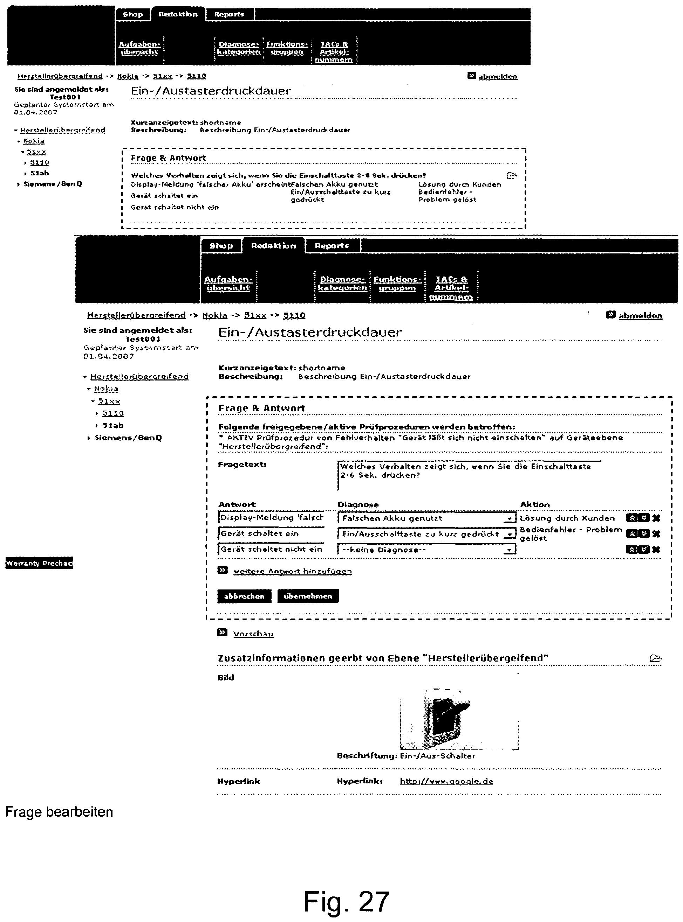

### 4. Use Case CR-DP4 Überprüfung/Frage bearbeiten (Fig. 27)

Der Redakteur bearbeitet eine Überprüfung, d.h. er ändert Fragetext, Antworten, zugeordnete Diagnosen.
Trigger: keiner
Input: Überprüfungsname und/oder -beschreibung; aktueller Gerätelevel (leer falls kontextfreier Einstieg); Prüfprozedur (leer falls Einstieg über Pflichtprüfungen/kontextfreier Einstieg); Fragetext; Antworten (mindestens eine) und/oder zugeordnete Diagnose (optional).
Result: Geänderte Überprüfung entsprechend obiger Angaben (Input); bearbeitender Redakteur wird als Autor der Prüfprozedur eingetragen.

Dabei ist folgender Ablauf vorgesehen:
1. Das System zeigt die Überprüfung mit Fragetext und/oder Überprüfungsergebnissen an (inkl. zugeordneter Diagnose und damit verbundener Aktion).
2. Der Redakteur schaut sich an, wie die Überprüfung in der Shopsicht aussieht (DP3-2 Überprüfung previewen).
3. Der Redakteur ändert den Namen und die Beschreibung. der Überprüfung.
4. Der Redakteur ändert den Fragetext und/oder die Antwortentexte.
5. Der Redakteur löscht Antworten und/oder fügt Antworten hinzu, fügt eine Sortierreihenfolge hinzu oder ändert die Sortierreihenfolge von Antworten.
6. Der Redakteur bestätigt die Änderungen.
7. Das System passt Namen, Beschreibung, Fragetext der Überprüfung und/oder die Antworten entsprechend der Vorgabe an. Falls der Einstieg über eine Prüfprozedur erfolgte, wird der bearbeitende Redakteur als Autor der Prüfprozedur eingetragen.

Alternativ und/oder ergänzend sind folgende Abläufe bzw. Ergänzungen und/oder Ausnahmen vorgesehen:
1. bis 7. können beliebig oft durchlaufen werden;
3. nicht möglich falls Einstieg über Prüfprozedur und Prüfprozedur im Status "freigegeben", "aktiv" oder "Archiviert" oder falls Prüfprozedur auf übergeordneter Ebene definiert. (aktueller Gerätelevel spezieller als Gerätelevel der Prüfprozedur);
3. bis 5.nicht möglich falls Einstieg über Prüfprozedur und Prüfprozedur im Status "Archiviert" oder falls Prüfprozedur auf übergeordneter Ebene definiert. (aktueller Gerätelevel spezieller als Gerätelevel der Prüfprozedur);
5.a. die Überprüfung wird neben dem aktuellen Einstieg (Prüfprozedur oder Pflichtprüfung) als Pflichtprüfung für andere Gerätelevel bzw. in weiteren bereits freigegebenen oder aktiven Prüfprozeduren verwendet;
5.a.1. das System zeigt die weiteren Verwendungen an und warnt den Redakteur, dass Änderungen auch für die anderen Verwendungen gelten und nur vom Chefredakteur ausgeführt werden können;
5.a.2. der Redakteur bestätigt die Warnung.

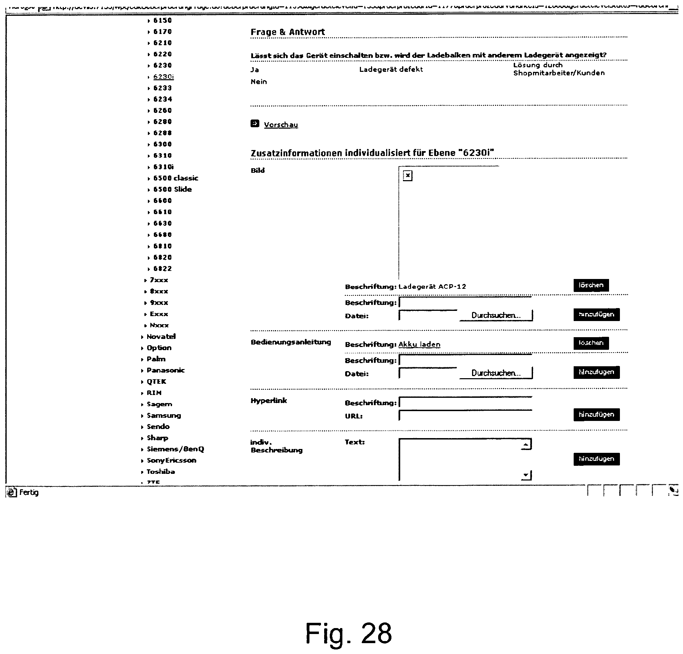

### 5. Use Case CR-DP5 Geerbte Zusatzinformationen (Fig. 28)

Der Redakteur bearbeitet (Anlegen, Löschen) gerätelevel-individuelle Zusatzangaben für die Überprüfung. Dies kann ein Foto, eine Anleitung (PDF) oder einen Link zu Herstellerinformationen umfassen
Trigger: keiner
Input: Aktueller Gerätelevel; Überprüfung; Dateiname und symbolischer Name (optional) des anzulegenden Fotos oder der Anleitung (PDF); URL und/oder symbolischer Name (optional) für den Herstellerlink.
Result: Überprüfung hat entsprechend den Vorgaben ein neues, geändertes oder gelöschtes Foto für aktuellen Gerätelevel, eine neue, geänderte oder gelöschte Anleitung (PDF) für aktuellen Gerätelevel, einen neuen, geänderten oder gelöschten Link zu Herstellerinformationen für aktuellen Gerätelevel.

Dabei ist folgender Ablauf vorgesehen:
1. Das System zeigt die aktuellen gerätelevelspezifischen Zusatzinformationen der Überprüfung an, d.h. Dateiname und symbolischer Name für vorhandenes Foto/PDF und symbolischer Name und URL für Herstellerlink. Sollten keine gerätelevelspezifischen Zusatzinformationen vorhanden sein, werden ggf. von einem höheren Gerätelevel geerbte Zusatzinformationen angezeigt.
2. Der Redakteur gibt Quelldatei und symbolischen Namen (optional) für ein neues Foto bzw. eine neue Anleitung an und bestätigt das Neu-Anlegen.
3. Das System stellt sicher, dass die Quelldatei existiert und die Anforderungen (vgl. unten Schritt 3.a.) an Fotos bzw. Anleitungen erfüllt.
4. Das System lädt die Quelldatei und ordnet sie der Überprüfung und dem aktuellen Gerätelevel zu.
5. Das System zeigt die geänderten aktuellen gerätelevelspezifischen Zusatzinformationen an (analog Schritt 1.).
6. Der Redakteur gibt die URL und den symbolischen Namen für den Link auf herstellerspezifische Informationen ein und bestätigt die Eingabe.
7. Das System stellt sicher, dass die URL wohlgeformt ist (vgl. unten Schritt 7.a.) und ändert die gerätelevelspezifische URL und den symbolischen Linknamen für die Überprüfung.
8. Das System zeigt die geänderten aktuellen gerätelevelspezifischen Zusatzinformationen an (analog Schritt 1.)

Alternativ und/oder ergänzend sind folgende Abläufe bzw. Ergänzungen und/oder Ausnahmen vorgesehen:
1. bis 8. können beliebig oft wiederholt werden;
1. bis 5., 6. bis 8. Reihenfolge beliebig;
1. bis 5. optional;
6. bis 8.optional;
2.a. Der Redakteur möchte ein vorhandenes Foto/ eine vorhandene Anleitung entfernen.
2.a.1. Der Redakteur initiiert das Löschen des bereits vorhandenen Fotos / der vorhandenen Anleitung.
2.a.2. Das System bittet um eine Bestätigung dass das vorhandene Foto und/oder die vorhandene Anleitung gelöscht werden soll.
2.a.3. Der Redakteur betätigt den Löschvorgang.
2.a.4. Das System entfernt das vorhandene Foto / die vorhandene Anleitung.
2.a.5. Weiter mit Schritt 1..
2.a.3.a. Der Redakteur möchte den Löschvorgang abbrechen.
2.a.3.a.1. Der Redakteur bestätigt den Abbruch des Löschvorgangs.
2.a.3.a.2. Weiter mit Schritt 1.
3.a. Die Quelldatei existiert nicht oder entspricht nicht den Foto-Anforderungen (JPEG, 800x600, max. 100k) bzw. Anleitungs-Anforderungen (PDF, max. 250k).
3.a.1. Das System gibt eine entsprechende Warnmeldung.
3.a.2. Der Redakteur bestätigt die Warnmeldung.
3.a.3. Weiter mit Schritt 1.
4.a. Es tritt ein Fehler beim Hochladen der Quelldatei auf.
4.a.1. Das System gibt eine entsprechende Warnmeldung.
4.a.2. Der Redakteur bestätigt die Warnmeldung.
4.a.3. Weiter mit Schritt 1.
6. Löschen erfolgt über leere Eingaben.
7.a. Die URL ist nicht wohlgeformt, d.h. syntaktisch inkorrekt bez. RFC2396 (nur absolute URLs).
7.a.1. Das System gibt eine entsprechende Warnmeldung.
7.a.2. Der Redakteur bestätigt die Warnmeldung.
7.a.3. Weiter mit Schritt 6.

Das Ersetzen von Fotos/PDFs entspricht vorteilhafterweise dem sequentiellen Ausführen von Löschen und/oder Anlegen. Da Shops die Zusatzinformationen (Fotos, PDF) vorteilhafterweise über ein Kommunikationsnetz laden, dürfen die Dateien nicht zu groß sein. Sicherheitsabfragen beim Löschen erfolgen vorteilhafterweise nur für Fotos und PDFs aber nicht für Hyperlinks. Die Validierung der URL erfolgt vorteilhafterweise über die Java-Klasse http://java.sun.com/j2se/1.5.0/docs/api/java/net/URL.html.

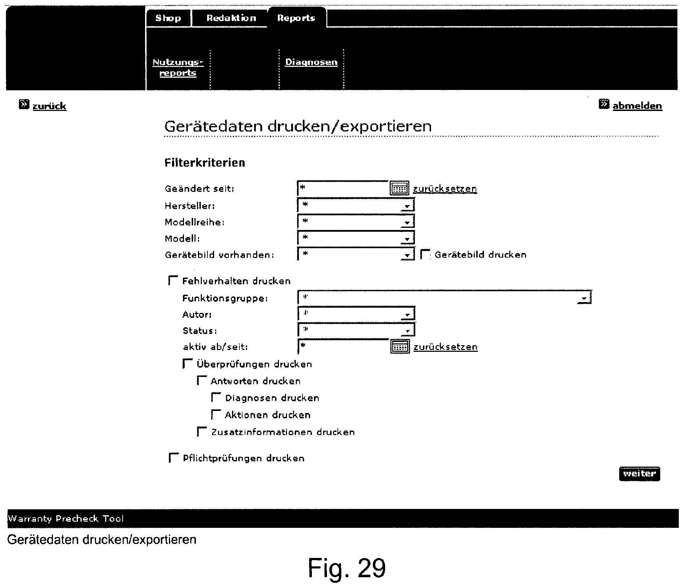

### 6. Use Case CR-DP8 Modeldaten ausdrucken/exportieren (Fig. 29)

Der Redakteur erstellt sich einen Export der Modelldaten, die nach verschiedenen Kriterien gefiltert werden können. Zusätzlich hat der Redakteur die Möglichkeit den Detaillierungsgrad des Exports über aufeinander aufbauenden Optionen stark zu beeinflussen.
Trigger: keiner;
Input: Filterkriterien und/oder Exportoptionen umfassend:
   - Geändert seit (Filter)
   - Hersteller (Filter)
   - Modellreihe (Filter)
   - Modell (Filter)
   - Gerätebild vorhanden (Filter)
      ∘ Gerätebild drucken/exportieren (Option)
   - Fehlverhalten drucken (Option)
      ∘ Funktionsgruppe (Option)
      □ Autor (Filter)
      □ Status aktiv ab/seit (Filter)
      □ Überprüfungen drucken/exportieren (Option)
   - Antworten drucken/exportieren (Option)
      ∘ Diagnosen drucken/exportieren (Option)
      ∘ Aktionen drucken/exportieren (Option)
   - Zusatzinformationen drucken/exportieren (Option)
      ∘ Bild drucken/exportieren (Option)
   - Pflichtprüfungen drucken/exportieren (Option)
Result: Export im PDF-Format, entsprechend der gesetzten Filterkriterien und/oder Attributselektion.

Dabei ist folgender Ablauf vorgesehen:
1. Das System erfragt Filterkriterien und welche Informationen bzw. bis zu welchem Detailgrad gedruckt werden soll.
2. Der Benutzer gibt den Detaillierungsgrad über z.T. hierarchisch voneinander abhängigen Optionen an.
3. Der Benutzer gibt je nach Detaillierungsgrad, eine Menge an Filterkriterien für den zu erstellenden Export vor.
4. Der Benutzer bestätigt die Erstellung des Exports.
5. Das System stellt sicher, dass die Filterkriterien konsistent sind.
6. Das System filtert die Modelldaten entsprechend der vorgegebenen Kriterien und fügt entsprechend der Optionsauswahl die gewünschten Informationen ein.
7. Das System zeigt den Report als PDF an.

Alternativ und/oder ergänzend sind folgende Abläufe bzw. Ergänzungen und/oder Ausnahmen vorgesehen:
1. bis 7. können beliebig oft wiederholt werden;
2. bis 5.a. Der Benutzer möchte die Modelldatenexport-Komponente abbrechen.
2-5.a.1. Der Benutzer bestätigt den Abbruch der Modelldatenexport-Komponente.
2-5.a.2. Ende des Use Cases.
6.a. Der vorgegebene Zeitraum ist inkonsistent oder liegt in der Zukunft.
6.a.1. Das System zeigt eine entsprechende Warnmeldung an.
6.a.2. Weiter mit Schritt 2.

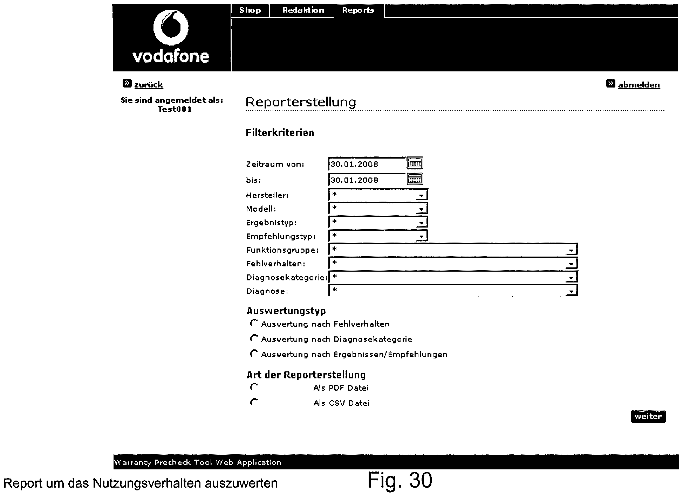

Der Export erfolgt wie nachstehend anhand eines Beispiels eines "Test Procedure Reports" wiedergegeben statisch und kann selektiv eingestellt werden. Fig. 30 zeigt ein Ausführungsbeispiel für entsprechende Eingabemasken einer Reporterstellung:

### Fehlverhalten

| | |
|---|---|
| Name: | Lautsprecher klingt zu leise, verrauscht oder funktioniert nicht. |
| Beschreibung: | Der Gesprächspartner wird nur schlecht oder gar nicht verstanden (ankommender Ton). |

### Geräteebene

| | |
|---|---|
| Ebene: | Herstellerübergreifend |
| Name: | Herstellerübergreifend |

### Prüfprozedurvariante

| | |
|---|---|
| Autor: | Michael Mustermann |
| Aktivierungsdatum: | 30.05.2008 |
| Kommentar: | keiner |
| Status: | aktiv |

### Überprüfungsübersicht

| Überprüfungsname | Vorbedingung |
|---|---|
| 1. Lautsprecher ist zu leise eingestellt | keine |
| 2. Lautsprecher macht Störgeräusche (Rauschen, Knistern usw.) | keine |
| 3. Lautsprecher funktioniert nicht | keine |

### Überprüfungsdetails

### 1. Name: Lautsprecher ist zu leise eingestellt

| | |
|---|---|
| Kurzname: | Lautsprecher leise |
| Beschreibung: | Der Lautsprecher lässt sich in der Lautstärke individuell anpassen. Überprüfen Sie bitte, ob die Lautstärke versehentlich zu leise eingestellt ist. |
| Vorbedingung: | keine (die Bedingung existiert nur im Kontext dieser Prüfprozedurvariante) |
| Frage: | Bitte prüfen Sie, ob die Hörerlautstärke zu leise eingestellt ist. Können Sie, durch Veränderung der Lautstärke, den Fehler beseitigen? |

**Antworten**

| Antworttext | Diagnose | Empfehlung |
|---|---|---|
| Ja, der Fehler konnte beseitigt | Offensichtlich lag kein Funktionsfehler des Gerätes vor, sondern ein Fehler bei der Bedienung des Gerätes. Buchen Servicefalls ist nötig. Das eines nicht | Bedienfehler - Problem gelöst. Keine weitere Aktion erforderlich |
| Nein, der Fehler besteht weiterhin. | | |

**Zusatzinformationen**

| (Die Zusatzinformationen gelten nur für die oben aufgeführte Geräteebene) | |
|---|---|
| Bildname: | Lautsprecher Test (Lautsprecher Test) |
| Anleitung: | |
| Link: | |
| Individuelle Beschreibung: | |

### 2. Name: Lautsprecher macht Störgeräusche (Rauschen, Knistern usw.)

| | |
|---|---|
| Kurzname: | Störgeräusche |
| Beschreibung: | Überprüfen Sie bitte, ob beim Telefonieren dauerhaft oder sporadisch Störgeräusche (Rauschen, Knacken, Knistern usw.) im Hörer-Lautsprecher auftreten. |
| Vorbedingung: | keine (die Bedingung existiert nur im Kontext dieser Prüfprozedurvariante) |
| Frage: | Ist die Tonwiedergabe durch den Hörer-Lautsprecher nachhaltig gestört? |

**Antworten**

| Antworttext | Diagnose | Empfehlung |
|---|---|---|
| Ja, die Tonwiedergabe ist gestört. | Der Lautsprecher hat voraussichtlich einen elektronischen Defekt. Vodafone Service Points können die Möglichkeit der Vor-Ort-Hilfe prüfen. | Buchen Sie einen Gewährleistungsfall in DASSNORAS! |
| Nein, die Tonwiedergabe funktioniert immer noch nicht korrekt. | | |

### Zusatzinformationen

(Die Zusatzinformationen gelten nur für die oben aufgeführte Geräteebene)
Bildname:
Anleitung:
Link:
Individuelle Beschreibung:

### 3. Name: Lautsprecher funktioniert nicht

| | |
|---|---|
| Kurzname: | Lautsprecher keine Funktion |
| Beschreibung: | Falls der Lautsprecher nicht funktioniert (Totalausfall), überprüfen Sie bitte, ob er vielleicht ausgeschaltet (stumm geschaltet) wurde. Es ist möglich den Lautsprecher während eines Gespräches vorübergehend stumm zu schalten. |
| Vorbedingung: | keine (die Bedingung existiert nur im Kontext dieser Prüfprozedurvariante) |
| Frage: | Ist der Lautsprecher im Menü ausgeschaltet? Prüfen Sie; ob z.B. die Hörerlautstärke vom Kunden versehentlich auf "0" gestellt wurde, oder die Stummschaltung aktiv ist. Nicht immer wird diese Art der "Stummschaltung" vom Gerät im Display angezeigt. War dies die Ursache des Problems? |

**Antworten**

| Antworttext | Diagnose | Empfehlung |
|---|---|---|
| Ja | Offensichtlich lag kein Funktionsfehler des Gerätes vor, sondern eine Fehlbedienung des Geräts durch den Kunden. | Bedienfehler - Problem gelöst. Keine weitere Aktion erforderlich. |
| Nein | Die Fehlersymptome des Gerätes weisen auf einen elektronischen Fehler hin (Servicefall) | Buchen Sie einen Gewährleistungsfall in DASS/VORAS! |

### Zusatzinformationen

(Die Zusatzinformationen gelten nur für die oben aufgeführte Geräteebene)
Bildname:
Anleitung:
Link:
Individuelle Beschreibung:

Die in den Figuren der Zeichnungen dargestellten Ausführungsbeispiele der Erfindung und die in Zusammenhang mit diesen Ausführungsbeispielen beschriebenen Ausführungsbeispiele der Erfindung dienen lediglich der Erläuterung der Erfindung und sind für diese nicht beschränkend.

## Patentansprüche

1. System zur teilautomatischen Analyse von Fehlverhalten eines in einem Kommunikationsnetz betreibbaren Kommunikationsendgerätes eines Kunden eines Kommunikationsnetzbetreibers oder eines in einem Kommunikationsnetzwerk betreibbaren Kommunikationsendgerätes eines Kunden eines Kommunikationsdiensteanbieters, zur Vorbestimmung von Gewährleistungs- und/oder Garantieansprüchen des Kunden bezogen auf das Kommunikationsendgerät, wobei das System dazu eingerichtet ist, seitens einer Kundenserviceeinrichtung datenbankseitig bereitgehaltene
mögliche Fehlverhalten von Kommunikationsendgeräten in funktionale Bereiche von Kommunikationsendgeräten abbildenden Funktionsgruppen,
mögliche Diagnosen von Fehlverhalten in funktionale Bereiche von Kommunikationsendgeräten abbildenden Diagnosekategorien, mögliche Überprüfungen von Fehlverhalten in funktionale Bereiche von Kommunikationsendgeräten abbildenden Überprüfungskategorien und Kommunikationsendgeräte in herstellerspezifische Merkmale oder Eigenschaften abbildenden Modellgruppen oder in gerätespezifische Merkmale oder Eigenschaften abbildenden Modellgruppen zu gruppieren,
wobei das System ferner dazu eingerichtet ist, die möglichen Funktionsgruppen, Diagnosekategorien, Überprüfungskategorien und Modellgruppen über Prüfprozeduren zumindest teilweise derart miteinander zu verknüpfen, dass
seitens der Kundenserviceeinrichtung anhand einer Eingabe einer IMEI oder TAC als Artikelnummer zur Identifizierung einer Modellgruppe zumindest eine wenigstens eine Überprüfungskategorie und/oder wenigstens eine Diagnosekategorie umfassende Prüfprozedur erzeugt und
seitens einer Anzeigeeinrichtung der Kundenserviceeinrichtung signalisiert wird,
wobei seitens einer im System enthaltenen Prüfprozedurerzeugungseinrichtung unter Berücksichtigung der datenbankseitig bereitgehaltenen möglichen Fehlverhalten, möglichen Diagnosen von Fehlverhalten und möglichen Überprüfungen von Fehlverhalten eine sukzessive Erzeugung der Prüfprozedur im Rahmen eines in graphischer Form auf der Anzeigeeinrichtung seitens der Kundenserviceeinrichtung signalisierten Ein- und Ausgabedialogs vorgesehen ist,
umfassend die Eingabe einer Funktionsgruppe, die Eingabe eines zu der Funktionsgruppe gehörigen Fehlverhaltens, die Ausgabe möglicher Diagnosen des Fehlverhaltens und die Ausgabe entsprechend der Diagnosen ermittelter möglicher Überprüfungen.

2. System nach Anspruch 1, **dadurch gekennzeichnet, dass** die funktionalen Bereiche der Funktionsgruppen, der Diagnosekategorien und/oder der Überprüfungskategorien in funktionale Unterbereiche aufgeteilt sind.

3. System nach Anspruch 1 oder Anspruch 2, **gekennzeichnet durch** wenigstens eine Redaktionseinrichtung zur Erstellung, Bearbeitung und/oder Organisation von Funktionsgruppen, Diagnosekategorien, Überprüfungskategorien, Modellgruppen und/oder Prüfprozeduren.

4. System nach einem der Ansprüche 1 bis 3, **gekennzeichnet durch** wenigstens eine Einrichtung zur Protokollierung und/oder Auswertung von überprüften Fehlverhalten.

5. System nach einem der Ansprüche 1 bis 4, **dadurch gekennzeichnet, dass** die möglichen Funktionsgruppen, Diagnosekategorien, Überprüfungskategorien und/oder Modellgruppen und/oder zumindest teilweise Prüfprozeduren jeweils in einer separaten Datenbank und/oder in einer gemeinsamen Datenbank der Kundenserviceeinrichtung bereitgehalten sind.

6. System nach Anspruch 5, **dadurch gekennzeichnet**, die separaten Datenbanken und/oder die gemeinsame Datenbank über ein Kommunikationsnetz mit der wenigstens einen Kundenserviceeinrichtung verbindbar sind.

7. System nach einem der Ansprüche 1 bis 6, **dadurch gekennzeichnet, dass** in den separaten Datenbanken und/oder die gemeinsame Datenbank in den Funktionsgruppen, Diagnosekategorien, Überprüfungskategorien und/oder Modellgruppen und/oder zumindest teilweise Prüfprozeduren Informationen bezüglich in einem Mobilfunknetz, vorzugsweise einem Mobilfunknetz gemäß einem GSM-, GPRS- und/oder UMTS-Funknetzstandard, betreibbaren mobilen Endgeräten als Kommunikationsendgeräten erfasst sind.

## Claims

1. A system for the partially automatic analysis of incorrect behaviour of a communication terminal of a customer of a communication network operator, which terminal can be operated in a communication network, or of a communication terminal of a customer of a communication service provider, which terminal can be operated in a communication network, for predetermining warranty and/or guarantee claims of the customer with respect to the communication terminal, wherein the system is adapted to group possible incorrect behaviours of communication terminals held ready by a data base of a customer service device into functional domains of functional groups which represent communication terminals,
possible diagnoses of incorrect behaviour held ready by a data base of a customer service device into functional domains of diagnosis categories which represent communication terminals,
possible inspections of incorrect behaviour held ready by a data base of a customer service device into functional domains of inspection categories which represent communication terminals and
communication terminals held ready by a data base of a customer service device into model groups which illustrate manufacturer specific features or characteristics or into model groups which illustrate device specific features or characteristics,
wherein the system is furthermore adapted to link the possible functional groups, diagnosis categories, inspection categories and model groups at least partially to each other via test procedures in such a way that on the base of an input of an IMEI or a TAC as an article number for identifying a model group, the customer service device generates a test procedure comprising at least one inspection category and/or at least one diagnosis category, and
a display device of the customer service device signalizes this test procedure,
wherein a test procedure generation device included in the system provides, in consideration of the possible incorrect behaviours, possible diagnoses of incorrect behaviour and possible inspections of incorrect behaviour held ready by the data base, a successive generation of the test procedure within the scope of an input and output dialogue signalized by means of the customer service device in graphic form on the display device,
comprising the input of a functional group, the input of an incorrect behaviour belonging to the functional group, the output of possible diagnoses of the incorrect behaviour and the output of possible inspections determined according to the diagnoses.

2. A system according to claim 1, **characterized in that** the functional areas of the functional groups, the diagnosis categories and/or the inspection categories are divided into functional sub-areas.

3. A system according to claim1 or claim 2, **characterized by** at least one editing device for forming, treating and/or organizing functional groups, diagnosis categories, inspection categories, model groups and/or test procedures.

4. A system according to one of the claims 1 to 3, **characterized by** at least one device for recording and/or evaluating reviewed incorrect behaviours.

5. A system according to one of the claims 1 to 4, **characterized in that** the possible functional groups, diagnosis categories, inspection categories and/or model groups and/or at least partially the test procedures are respectively held ready in a separate data base and/or in a common data base of the customer service device.

6. A system according to claim 5, **characterized in that** the separate data bases and/or the common data base can be connected to the at least one customer service device via a communication network.

7. A system according to one of the claims 1 to 6, **characterized in that** information with respect to mobile terminals which can be operated in a mobile radio network, preferably a mobile radio network according to a GSM, GPRS and/or UMTS radio network standard, as communication terminals is gathered in the separate data bases and/or the common data base in the functional groups, the diagnosis categories, the inspection categories and/or the model groups and/or at least partially in the test procedures.

## Revendications

1. Système d'analyse partiellement automatique d'un comportement erroné d'un terminal de communication d'un client d'un opérateur de réseau de communication, le terminal fonctionnant dans un réseau de communication, ou d'un terminal de communication d'un client d'un fournisseur de services de communication, le terminal fonctionnant dans un réseau de communication, pour prédéterminer des réclamations de garantie et/ou des droits de garantie du client par rapport au terminal de communication, le système étant adapté à grouper
des comportements erronés possibles de terminaux de communication tenus à disposition par une base de données d'un dispositif de service de client dans des domaines fonctionnels de groupes fonctionnels représentant des terminaux de communication,
des diagnostics possibles de comportement erroné tenus à disposition par une base de données d'un dispositif de service de client dans des domaines fonctionnels de catégories de diagnostic représentant des terminaux de communication,
des examens possibles de comportement erroné tenus à disposition par une base de données d'un dispositif de service de client dans des domaines fonctionnels de catégories d'examen représentant des terminaux de communication, et
des terminaux de communication tenus à disposition par une base de données d'un dispositif de service de client dans des groupes de modèles représentant des propriétés ou des caractéristiques spécifiques aux fabricants ou dans des groupes de modèles représentant des propriétés ou des caractéristiques spécifiques aux dispositifs,
dans lequel le système est en outre adapté à relier au moins partiellement l'un à l'autre les groupes fonctionnels possibles, les catégories de diagnostic possibles, les catégories d'examen possibles et les groupes de modèles possibles via des procédures de test, de sorte que
sur la base d'une entrée d'un IMEI ou d'un TAC comme numéro d'article pour identifier un groupe de modèles, le dispositif de services de client génère une procédure de test comprenant au moins une catégorie d'examen et/ou au moins une catégorie de diagnostic, et
un dispositif d'affichage du dispositif de services de client signalise cette procédure de test,
dans lequel un dispositif de génération de procédure de test contenu dans le système fournit, en tenant compte des comportements erronés possibles, des diagnostics possibles des comportements erronés et des examens possibles des comportements erronés tenus à disposition par la base de données, une génération successive de la procédure de test dans le cadre d'un dialogue d'entrée et de sortie signalisé par le dispositif de services de client sous forme graphique sur le dispositif d'affichage.
comprenant l'entrée d'un groupe fonctionnel, l'entrée d'un comportement erroné appartenant au groupe fonctionnel, la sortie des diagnostics possibles du comportement erroné et la sortie des examens possibles déterminés selon les diagnostics.

2. Système selon la revendication 1, **caractérisé en ce que** les domaines fonctionnels des groupes fonctionnels, des catégories de diagnostic et/ou des catégories d'examen sont divisés en sous-domaines fonctionnels.

3. Système selon la revendication 1 ou la revendication 2, **caractérisé par** au moins un dispositif de rédaction pour former, traiter et/ou organiser des groupes fonctionnels, des catégories de diagnostic, des catégories d'examen, des groupes de modèles et/ou des procédures de test.

4. Système selon l'une des revendications 1 à 3, **caractérisé par** au moins un dispositif pour enregistrer et/ou évaluer des comportements erronés examinés.

5. Système selon l'une des revendications 1 à 4, **caractérisé en ce que** les groupes fonctionnels possibles, les catégories de diagnostic possibles, les catégories d'examen possibles et/ou les groupes de modèles possibles et/ou au moins partiellement les procédures de test sont chacun tenus à disposition dans une base de données séparée et/ou dans une base de données commune du dispositif de services de client.

6. Système selon la revendication 5, **caractérisé en ce que** les bases de données séparées et/ou la base de données commune peuvent être reliées via un réseau de communication à l'au moins un dispositif de services de client.

7. Système selon l'une des revendications 1 à 6, **caractérisé en ce que** des informations par rapport à des terminaux mobiles fonctionnant dans un réseau radio mobile, de préférence un réseau radio mobile selon un standard de réseau radio GSM, GPRS et/ou UMTS, et servant de terminaux de communication sont saisies dans les bases de données séparées et/ou dans la base de données commune dans les groupes fonctionnels, les catégories de diagnostic, les catégories d'examen et/ou les groupes de modèles et/ou au moins partiellement dans des procédures de test.
